# FASCICULE DE BREVET EUROPEEN

(11) **EP 1 639 340 B1**
(45) Date de publication et mention de la délivrance du brevet: **28.11.2007**
(21) Numéro de dépôt: 04739821.9
(22) Date de dépôt: 11.06.2004
(51) Int. Cl.: G01N 3/56, G01M 17/02

(54) **PROCEDE POUR PREDIRE L'USURE D'UN PNEUMATIQUE ET SYSTEME POUR SA MISE EN OEUVRE**
VERFAHREN ZUR VORAUSSAGE DES VERSCHLEISSES EINES REIFENS UND ENTSPRECHENDES SYSTEM
PROCEDE POUR PREDIRE L'USURE D'UN PNEUMATIQUE ET SYSTEME POUR SA MISE EN OEUVRE

(30) Priorité: 18.06.2003 FR 0307374
(43) Date de publication de la demande: 29.03.2006
(73) Titulaire: Société de Technologie Michelin, 63000 Clermont-Ferrand (FR); Michelin Recherche et Technique S.A., 1763 Granges-Paccot (CH)
(72) Inventeur: BOCQUILLON, Arnaud, F-63100 Clermont-Ferrand (FR); FINCK, François, F-63140 Chatel-Guyon (FR); GUIET, Dominique, F-63100 Clermont-Ferrand (FR)
(74) Mandataire: Dequire, Philippe Jean-Marie Denis
(86) Numéro de dépôt international: PCT/EP2004/006331
(87) Numéro de publication internationale: WO 2004/111617

(56) Documents cités:
- FR-A- 2 816 402
- PATENT ABSTRACTS OF JAPAN vol. 2003, no. 06, 3 June 2003 (2003-06-03) & JP 2003 050190 A (BRIDGESTONE CORP), 21 February 2003 (2003-02-21)

## Description

La présente invention concerne un procédé pour prédire l'usure d'au moins un pneumatique équipant un véhicule terrestre à moteur, et un système de prédiction de l'usure pour la mise en oeuvre de ce procédé. L'invention s'applique à tout véhicule automobile de type tourisme, poids lourd ou génie civil, ainsi qu'à tout véhicule à deux roues de type motocyclette.

Un tel procédé est connu par example du document FR-A-2 816 402, correspondant au préambule de la revendication 1.

Il est connu de prédire l'usure d'un pneumatique équipant un véhicule automobile en tenant compte à la fois de l'usage qui est fait du véhicule en roulage (i.e. du caractère plus ou moins sévère de la conduite du véhicule), des caractéristiques propres de ce véhicule et de celles du pneumatique, par l'article « Evaluation of Tire Wear Performance, Olivier Le Maître, Manfred Süssner, Cesar Zarak - Society of Automotive Engineers (SAE) Technical Paper Series 980256, pp. 46-47 (International Congress and Exposition Detroit, Michigan, February 23-26, 1998) ».

Pour estimer la sévérité de la conduite du véhicule, on mesure à chaque tour de roue (ou en fonction du temps) les accélérations longitudinales et transversales au centre de gravité du véhicule, puis on stocke la somme des informations d'accélérations obtenues dans une matrice.

On utilise ces informations d'accélérations pour obtenir des informations représentatives des efforts et attitudes aux centres-roues des ensembles montés du véhicule (telles que les efforts longitudinaux Fₓ, transversaux F_{y} et verticaux F_{z}, l'angle de dérive et l'angle de carrossage pour chaque pneumatique et pour une combinaison d'accélérations transversale et longitudinale), par l'intermédiaire d'un modèle « véhicule » rendant compte des réglages statiques de pince et de carrossage, des conditions de charge statique du véhicule, des propriétés de forces et de moments relatives aux pneumatiques, et des variations de pince et de carrossage (dues au roulis, au tangage, à la conformité aux forces transversales et longitudinales et au couple d'auto-alignement).

On utilise ensuite un modèle « pneumatique » ou modèle d'usure du pneumatique pour prédire l'usure à partir de conditions données appliquées aux centres-roues (en fonction de Fₓ, F_{y}, F_{z}, de l'angle de dérive et de l'angle de carrossage pour un pneumatique donné).

Ce modèle d'usure prend en compte les spécifications mécaniques des fonctions du pneumatique (rigidités de la bande de roulement, du sommet et des flancs) basées sur des résultats d'éléments finis et sur des données expérimentales, et il permet de prédire la distribution locale des contraintes et la vitesse de glissement dans l'aire de contact, à partir desquelles on peut prédire l'usure de la bande de roulement.

Un but de l'invention est de proposer un nouveau procédé pour prédire l'usure d'au moins un pneumatique dont la bande de roulement comporte des sculptures et qui équipe un véhicule terrestre à moteur, et un système de prédiction pour la mise en oeuvre de ce procédé qui permette à un utilisateur, tel que le conducteur du véhicule, de connaître d'une manière fiable à un instant donné le degré d'usure dudit ou de chaque pneumatique (ou la durée d'usage restante ou encore le kilométrage restant qui en résultent), et/ou d'adapter des paramètres de pilotage de systèmes d'aide à la conduite tels que des systèmes «ABS» (système de freinage antiblocage) ou « ESP » (dispositif électronique de stabilité programmé), cela en fonction de caractéristiques d'usage dudit véhicule.

A cet effet, le procédé de prédiction de l'usure selon l'invention comprend les étapes successives suivantes :
(i) l'obtention à chaque tour de roue ou à des intervalles de temps donnés de caractéristiques de roue relatives à au moins une roue comprenant les efforts appliqués au centre de cette roue dans les directions longitudinale, transversale et verticale et les angles de carrossage γ et de dérive δ,
(ii) un traitement desdites caractéristiques de roue en relation avec des paramètres caractérisant le pneumatique monté sur ladite roue, pour l'obtention à chaque tour de roue ou à ces intervalles de temps donnés de caractéristiques de contact desdites sculptures caractérisant l'aire de contact dudit pneumatique avec le sol de roulage qui sont représentatives des efforts appliqués sur chaque sculpture dans lesdites directions longitudinale, transversale et verticale, et
(iii) un traitement des caractéristiques de contact pour prédire des caractéristiques instantanées d'usure représentatives de l'usure de chaque sculpture à chaque tour de roue ou à ces intervalles de temps donnés, et une sommation de ces caractéristiques instantanées sur une période donnée pour obtenir, pour chaque sculpture, des caractéristiques prédites d'usure cumulée,
   ce procédé selon l'invention est tel qu'il comprend en outre les étapes successives suivantes :
(iv) une mesure à un instant donné d'au moins une caractéristique réelle d'usure cumulée du pneumatique sur au moins l'une des sculptures ou en moyenne sur une section axiale du pneumatique,
(v) une comparaison d'au moins l'une desdites caractéristiques prédites cumulées obtenues en (iii) à la caractéristique réelle correspondante mesurée en (iv), et
(vi) une prise en compte du résultat de la comparaison prévue en (v) pour la réalisation d'un nouveau cycle de prédiction de caractéristiques corrigées d'usure instantanée et d'usure cumulée.

Avantageusement, ce procédé comprend, antérieurement à ladite étape (i) :
- une mesure en temps réel et à chaque tour de roue ou à intervalles de temps donnés de sollicitations de roulage qui sont appliquées au centre de gravité dudit véhicule en roulage et qui comprennent les intensités des accélérations longitudinales γₓ et transversales γ_{y} ou bien les forces longitudinales et transversales correspondantes Fₓ et F_{y}, (ces accélérations ou ces forces étant mesurées par des accéléromètres ou des dynamomètres, ou bien étant obtenues à partir de systèmes « ABS » ou « ESP » ou encore à partir d'un système mondial de positionnement « GPS »), puis
- un traitement de ces accélérations ou de ces forces mesurées à chaque tour de roue ou à ces intervalles de temps donnés en relation avec des paramètres caractérisant le véhicule, pour l'obtention à chaque tour de roue ou à ces intervalles de temps donnés des caractéristiques visées à l'étape (i).

On notera que lesdites caractéristiques de roue peuvent être obtenues directement à partir de la mesure des trois composantes de la résultante d'efforts exercés par le sol de roulage sur l'aire de contact du pneumatique, laquelle est déterminée par traitement d'au moins deux mesures d'extension ou de contraction circonférentielle dans au moins un flanc du pneumatique en deux points fixes dans l'espace, situés à des azimuts différents le long de la circonférence. Cette contraction ou extension circonférentielle des flancs est avantageusement estimée par la mesure de la distance entre les fils de la nappe carcasse des flancs. On se reportera au document de brevet WO-A-03/014693 au nom des demanderesses pour une description détaillée de cette mesure des caractéristiques de roue à partir des efforts dans l'aire de contact.

Selon une autre caractéristique de l'invention, lesdites sollicitations de roulage comprennent en outre la vitesse V dudit véhicule mesurée également audit centre de gravité et/ou la charge transportée par ledit véhicule. De préférence, ces sollicitations de roulage comprennent en combinaison cette vitesse V et cette charge transportée.
Selon une autre caractéristique de l'invention, ce procédé comprend la mesure en temps réel de réglages statiques comprenant la pince et le carrossage, antérieurement à ladite étape (iii).
Selon une autre caractéristique de l'invention, le traitement visé à ladite étape (iii) est en outre fonction de paramètres relatifs au sol de roulage tels que son caractère sec, humide ou mouillé (déterminé par exemple par la mise en action ou non des essuie-glaces) et/ou de la température du sol de roulage, pour la prédiction desdites caractéristiques instantanées d'usure.
- Selon un mode de réalisation de l'invention, lesdites caractéristiques réelles d'usure cumulée visées à ladite étape (iv) sont obtenues par un examen du pneumatique à l'arrêt dudit véhicule (cet examen pouvant être simplement visuel ou bien réalisé au moyen d'un dispositif de mesure appropriée, par exemple via un « profondimètre » ou un rayonnement laser).
- Selon une première variante de ce mode de réalisation, lesdites caractéristiques réelles d'usure cumulée visées à ladite étape (iv) sont obtenues par l'intermédiaire de moyens de mesure de l'usure du pneumatique, en continu ou en discontinu, dont est pourvu le véhicule et qui sont destinés à informer en temps réel le conducteur du véhicule de l'atteinte d'un ou de plusieurs seuils prédéterminés d'usure sur au moins l'une desdites sculptures.

Selon un premier exemple de réalisation selon l'invention de cette première variante, ladite étape (iv) consiste à utiliser les moyens de mesure de l'usure qui sont décrits dans la demande de brevet internationale PCT/EP02/10936 au nom des demanderesses. Ladite étape (iv) consiste alors à réaliser une mesure de capacité ou de résistance électrique à l'intérieur de ladite sculpture, et à en déduire la hauteur de cette sculpture par une relation reliant ladite capacité ou ladite résistance à cette hauteur, par exemple en prévoyant à l'intérieur du pneumatique un module électronique d'acquisition qui est connecté à ladite sculpture en dessous de cette dernière.
Cette mesure des valeurs de capacité ou de résistance peut être réalisée au moyen d'un module d'acquisition desdites valeurs qui est prévu dans ledit pneumatique. Elle peut également être réalisée via une mesure de capacité relative à la sculpture, en déterminant la fréquence d'accord d'un circuit résonnant passif comportant au moins un condensateur qui est formé par la sculpture et une inductance reliée au condensateur dans la bande de roulement du pneumatique, au moyen d'un circuit d'interrogation qui est monté sur la roue ou sur une partie fixe du véhicule qui est adjacente à la roue.
Dans le premier cas précité, on peut réaliser une mesure de capacité relative à la sculpture par téléalimentation du module d'acquisition via un circuit d'interrogation monté sur la roue ou sur une partie fixe du véhicule adjacente à la roue, et à transmettre au circuit d'interrogation la mesure de capacité acquise par le module via une inductance couplée dans le pneumatique au module d'acquisition.

Selon un second exemple de réalisation selon l'invention de cette première variante, ladite étape (iv) consiste à utiliser les moyens de mesure de l'usure qui sont décrits dans la demande de brevet internationale PCT/EP02/12262 au nom des demanderesses. Cette demande présente un procédé de mesure de l'usure d'un pneumatique dont les sculptures sont reliées entre elles par des sillons, le véhicule comportant un châssis et un dispositif de suspension assurant une liaison flexible entre le châssis et la roue, et ladite étape (iv) consiste alors :
a) à effectuer à un instant donné une mesure d'une valeur représentative de la distance entre, d'une part, un premier point solidaire dudit dispositif de suspension qui fait face audit pneumatique et qui occupe une position ou une pluralité de positions telles que la projection orthogonale dudit premier point sur le plan circonférentiel médian dudit pneumatique reste à égale distance de celle de l'axe de ladite roue sur ledit plan, ou un second point solidaire dudit châssis qui fait face audit pneumatique, et, d'autre part, le sommet de l'une au moins desdites sculptures en regard dudit premier ou second point,
b) soit, dans un premier cas, à effectuer audit instant donné une mesure d'une valeur de référence représentative d'une distance mesurée entre ledit premier ou second point et le fond de l'un desdits sillons en regard dudit premier ou second point, soit, dans un second cas, à effectuer ultérieurement une mesure d'une autre valeur de référence représentative d'une distance mesurée entre ledit premier point et l'un desdits sommets, et
c) à comparer la valeur mesurée au paragraphe a) à la valeur de référence mesurée au paragraphe b) pour en déduire, dans ledit premier cas, une information d'usure représentative de la hauteur de ladite sculpture par mesure différentielle audit instant, et, dans ledit second cas, une information d'usure représentative de l'évolution de l'usure du sommet de ladite sculpture dans un intervalle de temps donné.

Selon un troisième exemple de réalisation selon l'invention de cette première variante, ladite étape (iv) consiste à utiliser les moyens de mesure décrits dans la demande de brevet internationale PCT/EP03/00888 au nom des demanderesses. Ladite étape (iv) comprend alors l'affectation, à une variable discrète d'impédance représentative de l'impédance d'un circuit accordé passif contenu dans l'une au moins des sculptures, d'une variable discrète d'usure représentative de l'usure de la sculpture.
Avantageusement, ladite étape (iv) comprend alors la mesure de fréquences de résonance du circuit accordé qui sont respectivement représentatives de valeurs de la variable d'impédance, et la comparaison de chaque fréquence mesurée avec une ou des fréquences de résonance de référence qui sont chacune représentatives d'une usure de la sculpture en deçà de l'un au moins des seuils. De préférence, le circuit accordé comporte une bobine et n (n ≥ 1) condensateur(s) monté(s) en dérivation aux bornes de la bobine.

Selon un quatrième exemple de réalisation selon l'invention de cette première variante, ladite étape (iv) consiste à utiliser les moyens de mesure de l'usure qui sont décrits dans la demande de brevet internationale PCT/EP03/00557 au nom des demanderesses. Ladite étape (iv) comprend alors l'affectation, à une variable d'énergie représentative de l'énergie d'un rayonnement électromagnétique tel que la lumière visible transmis de l'espace extérieur à l'espace intérieur dudit pneumatique à travers l'une au moins desdites sculptures, d'une variable d'usure représentative de l'usure de ladite ou desdites sculptures. Selon une autre caractéristique de cette étape (iv), ladite variable d'énergie est elle-même représentative de l'affleurement d'un moyen de transmission de rayonnements électromagnétiques à la surface du sommet de ladite sculpture.
Le pneumatique pour la mise en oeuvre de cette étape (iv) comporte alors dans sa masse au moins un moyen de transmission des rayonnements électromagnétiques qui est prévu pour pouvoir transmettre à travers l'une au moins desdites sculptures un rayonnement incident issu de l'espace extérieur au pneumatique à l'espace intérieur à celui-ci, à partir du moment où ce moyen de transmission affleure à la surface du sommet de ladite sculpture.
De préférence, le ou chaque moyen de transmission est perméable à la lumière visible (i.e translucide ou transparent) et il peut être par exemple constitué de caoutchouc(s) ou d'une ou plusieurs fibre(s) optique(s).
- Selon une seconde variante de réalisation de l'invention, lesdites caractéristiques réelles d'usure cumulée visées à ladite étape (iv) sont obtenues par l'intermédiaire de moyens de mesure prévus sur ledit véhicule pour la mesure de l'usure moyenne desdites sculptures sur une section axiale dudit pneumatique.
   Avantageusement selon cette seconde variante, ladite étape (iv) consiste successivement :

- à estimer la valeur R_{e,t} du rayon de roulement dudit pneumatique à un instant t,
- à comparer cette valeur estimée R_{e,t} à au moins une valeur de référence R_{e,t0} pour ce rayon de roulement correspondant à un degré déterminé d'usure du même pneumatique à un instant antérieur t₀, en calculant le rapport R_{e,t} / R_{e,t0},
- à déduire de ce rapport R_{e,t} / R_{e,t0} le rapport d'usure moyenne sur une section axiale du pneumatique qui est égal à la hauteur moyenne h, des sculptures à l'instant t sur leur hauteur moyenne hₜ₀ à l'instant t₀, par l'intermédiaire d'une loi d'usure spécifique audit pneumatique.

Selon une autre caractéristique de cette seconde variante, ladite valeur R_{e,t} du rayon de roulement dudit pneumatique à un instant t est estimée par :
- la mesure à un instant t donné du nombre de tours de la roue sur laquelle est montée ledit pneumatique depuis ledit instant antérieur t₀,
- la mesure à cet instant t de la distance parcourue par ledit véhicule depuis ledit instant antérieur t₀,
- l'obtention d'une valeur théorique R_{th,t} du rayon de roulement à cet instant t par le rapport de ladite distance parcourue sur ledit nombre de tours de roue audit instant t,
- la mesure à cet instant t de paramètres correctifs relatifs aux conditions de roulage dudit véhicule, comprenant notamment la température et la pression internes audit pneumatique, la charge et le couple moteur ou freineur appliqués audit pneumatique, et
- le calcul de ladite valeur estimée R_{e,t} du rayon de roulement dudit pneumatique audit instant t à partir de ladite valeur théorique R_{th,t} et desdits paramètres correctifs.

Selon un mode de réalisation de l'invention, ledit procédé de prédiction est tel que ladite étape (vi) comprend une initialisation de ladite ou chaque caractéristique prédite cumulée obtenue en (iii) pour le cycle suivant de prédiction, compte tenu de la différence existant entre la valeur de ladite ou chaque caractéristique prédite cumulée et celle de la caractéristique réelle d'usure cumulée correspondante mesurée en (iv).
Selon un autre mode de réalisation de l'invention, ledit procédé de prédiction est tel que ladite étape (vi) comprend une correction adaptative des traitements prévus auxdites étapes (ii) et (iii) lors du cycle suivant de prédiction, compte tenu du rapport entre ladite ou chaque caractéristique prédite cumulée obtenue en (iii) et la caractéristique réelle d'usure cumulée correspondante mesurée en (iv).
On notera que d'autres modes d'initialisation ou de « recalage » plus complexes sont également utilisables, par exemple utilisant la caractéristique de vitesse d'usure sur les derniers kilomètres parcourus, pour corriger la caractéristique d'usure prédite cumulée.

D'une manière générale, on notera que lesdites caractéristiques prédites d'usure instantanées et/ou lesdites caractéristiques d'usure cumulée obtenues en (iii) sont représentatives d'une ou plusieurs zones axiales circonférentielles déterminées de ladite bande de roulement.
On notera également que le procédé de prédiction selon l'invention comprend avantageusement l'information en temps réel du conducteur dudit véhicule de l'usure, soit de toutes les sculptures, soit de celle(s) d'entre elles le plus usées.

On notera que le procédé selon l'invention de prédiction de l'usure permet de connaître d'une manière fiable à un instant donné non seulement le degré d'usure d'un pneumatique, mais encore la durée d'usage restante ou le kilométrage restant qui en résultent.
On notera en outre que ce procédé de prédiction selon l'invention peut être utilisé pour fournir les caractéristiques d'usure prédites à des algorithmes de pilotage que comporte le système de sécurité du véhicule, ces algorithmes étant prévus pour commander des systèmes d'aide à la conduite tels que des systèmes « ABS » ou « ESP », de sorte à adapter les paramètres de pilotage de ces systèmes.

Un système de prédiction de l'usure selon l'invention pour la mise en oeuvre du procédé de prédiction détaillé ci-dessus est tel qu'il comporte essentiellement :
- une mémoire de véhicules à lecture et à écriture contenant une base de données relative à une pluralité de véhicules terrestres à moteur pourvus chacun de pneumatiques montés sur des roues, cette base de données comprenant, pour chaque véhicule, sa masse, ses caractéristiques géométriques et ses caractéristiques de rigidité de dérive,
- des moyens pour obtenir, à chaque tour de roue ou à des intervalles de temps donnés, des caractéristiques de roue relatives à au moins une roue comprenant les efforts appliqués au centre de cette roue dans les directions longitudinale X, transversale Y et verticale Z et les angles de carrossage γ et de dérive δ,
- une mémoire de pneumatiques à lecture et à écriture contenant une base de données relative à une pluralité de pneumatiques différents, telles que leurs dimensions et les caractéristiques géométriques et mécaniques de chacune de leurs sculptures,
- une première unité de traitement prévue pour traiter lesdites caractéristiques de roue en relation avec des paramètres de pneumatique extraits de ladite mémoire de pneumatiques caractérisant le pneumatique monté sur ladite roue, et pour en déduire à chaque tour de roue ou à ces intervalles de temps donnés des caractéristiques de contact desdites sculptures caractérisant l'aire de contact dudit pneumatique avec le sol de roulage qui sont représentatives des efforts appliqués sur chaque sculpture dans lesdites directions X, Y et Z,
- une seconde unité de traitement prévue pour prédire, à partir desdites caractéristiques de contact, des caractéristiques instantanées d'usure représentatives de l'usure de chaque sculpture à chaque tour de roue ou à ces intervalles de temps donnés, et pour cumuler sur une période donnée ces caractéristiques instantanées, de sorte à obtenir pour chaque sculpture des caractéristiques prédites d'usure cumulée, et
- une unité de recalage prévue pour intégrer à un instant donné au moins une caractéristique réelle d'usure cumulée du pneumatique sur au moins l'une des sculptures ou en moyenne sur une section axiale dudit pneumatique, pour comparer au moins l'une desdites caractéristiques prédites d'usure cumulée à la caractéristique d'usure réelle correspondante et pour prendre en compte le résultat de cette comparaison en vue de la réalisation d'un nouveau cycle de prédiction de caractéristiques corrigées d'usure instantanée et d'usure cumulée, ladite caractéristique réelle d'usure cumulée pouvant provenir de moyens de mesure montés ou non sur le véhicule.

Avantageusement, ledit système de prédiction de l'usure selon l'invention comporte en outre :
- des moyens de mesure prévus pour mesurer en temps réel et à chaque tour de roue ou à ces intervalles de temps donnés des sollicitations de roulage qui sont appliquées au centre de gravité du véhicule en roulage, et qui comprennent les intensités des accélérations longitudinales γ_{X} et transversales γ_{Y} ou bien les forces longitudinales et transversales correspondantes F_{X} et F_{Y}, et
- une troisième unité de traitement prévue pour traiter lesdites accélérations ou lesdites forces mesurées à chaque tour de roue ou à ces intervalles de temps en relation avec lesdits paramètres de véhicule, pour l'obtention à chaque tour de roue ou à ces intervalles desdites caractéristiques de roue.

Selon une autre caractéristique de l'invention, lesdites sollicitations de roulage comprennent également la vitesse V dudit véhicule mesurée également audit centre de gravité et/ou la charge transportée par ledit véhicule.
Selon une autre caractéristique de l'invention, ledit système de prédiction de l'usure comprend en outre, en amont de ladite seconde unité de traitement, des moyens de mesure en temps réel de réglages statiques comprenant la pince et le carrossage.
Selon une autre caractéristique de l'invention, ladite seconde unité de traitement est prévue pour prédire lesdites caractéristiques instantanées d'usure en fonction de paramètres relatifs au sol de roulage tels que son caractère sec, humide ou mouillé (déterminé par exemple par la mise en action ou non des essuie-glaces) et/ou de la température dudit sol.
- Selon un mode avantageux de réalisation de l'invention, le système comporte des moyens de mesure desdites caractéristiques réelles d'usure cumulée montés sur ledit véhicule et destinés à informer en temps réel le conducteur du véhicule de l'atteinte d'un ou de plusieurs seuils prédéterminés d'usure sur au moins l'une desdites sculptures.

Selon un premier exemple de ce mode de réalisation se référant à la demande de brevet internationale PCT/EP02/10936 précitée, lesdits moyens de mesure sont prévus pour mesurer la capacité ou la résistance électrique à l'intérieur de ladite sculpture, et pour en déduire la hauteur de ladite sculpture par une relation reliant ladite capacité ou ladite résistance à cette hauteur.
Selon un second exemple de ce mode de réalisation se référant à la demande de brevet internationale PCT/EP02/12262 précitée dans laquelle les sculptures du pneumatique sont reliées entre elles par des sillons et le véhicule comporte un châssis et un dispositif de suspension assurant une liaison flexible entre le châssis et la roue, lesdits moyens de mesure sont prévus pour :
a) effectuer à un instant donné une mesure d'une valeur représentative de la distance entre, d'une part, un premier point solidaire dudit dispositif de suspension qui fait face audit pneumatique et qui occupe une position ou une pluralité de positions telles que la projection orthogonale dudit premier point sur le plan circonférentiel médian dudit pneumatique reste à égale distance de celle de l'axe de ladite roue sur ledit plan, ou un second point solidaire dudit châssis qui fait face audit pneumatique, et, d'autre part, le sommet de l'une au moins desdites sculptures en regard dudit premier ou second point,
b) soit, dans un premier cas, effectuer audit instant donné une mesure d'une valeur de référence représentative d'une distance mesurée entre ledit premier ou second point et le fond de l'un desdits sillons en regard dudit premier ou second point, soit, dans un second cas, effectuer ultérieurement une mesure d'une autre valeur de référence représentative d'une distance mesurée entre ledit premier point et l'un desdits sommets, et pour
c) comparer la valeur mesurée au § a) à la valeur de référence mesurée au § b) pour en déduire, dans le premier cas, une information d'usure représentative de la hauteur de la sculpture par mesure différentielle audit instant, et, dans le second cas, une information d'usure représentative de l'évolution de l'usure du sommet de la sculpture dans un intervalle de temps donné.

Selon un troisième exemple de ce mode de réalisation se référant à la demande de brevet internationale PCT/EP03/00888 précitée, lesdits moyens de mesure sont prévus pour affecter, à une variable discrète d'impédance représentative de l'impédance d'un circuit accordé passif contenu dans l'une au moins des sculptures, une variable discrète d'usure représentative de l'usure de la sculpture.

Selon un quatrième exemple de ce mode de réalisation se référant à la demande de brevet internationale PCT/EP03/00557 précitée, lesdits moyens de mesure sont prévus pour affecter, à une variable d'énergie représentative de l'énergie d'un rayonnement électromagnétique tel que la lumière visible transmis de l'espace extérieur à l'espace intérieur dudit pneumatique à travers l'une au moins desdites sculptures, une variable d'usure représentative de l'usure de ladite ou desdites sculptures.

Ladite variable d'énergie est elle-même représentative de l'affleurement d'un moyen de transmission de rayonnements électromagnétiques à la surface du sommet dudit élément.
- Selon un autre mode avantageux de réalisation de l'invention, lesdits moyens de mesure desdites caractéristiques réelles d'usure cumulée sont prévus sur le véhicule pour mesurer l'usure moyenne desdites sculptures sur une section axiale dudit pneumatique.

Avantageusement, lesdits moyens de mesure sont prévus pour :
- estimer la valeur R_{e,t} du rayon de roulement dudit pneumatique à un instant t, puis
- comparer cette valeur estimée R_{e,t} à au moins une valeur de référence R_{e,t0} pour ce rayon de roulement correspondant à un degré déterminé d'usure du même pneumatique à un instant antérieur t₀, en calculant le rapport R_{e,t}/ R_{e,t0}, puis
- déduire de ce rapport R_{e,t} / R_{e,t0} le rapport d'usure moyenne sur une section axiale du pneumatique qui est égal à la hauteur moyenne h, des sculptures à l'instant t sur leur hauteur moyenne hₜ₀ à l'instant t₀, par l'intermédiaire d'une loi d'usure spécifique audit pneumatique.

Selon une autre caractéristique de cet autre mode de réalisation selon l'invention, ladite valeur R_{e,t} du rayon de roulement dudit pneumatique à un instant t est estimée par :
- des premiers moyens prévus pour mesurer à un instant t donné le nombre de tours de la roue sur laquelle est montée ledit pneumatique depuis ledit instant antérieur t₀,
- des seconds moyens prévus pour mesurer à cet instant t la distance parcourue par ledit véhicule depuis ledit instant antérieur t₀,
- des troisièmes moyens prévus pour mesurer à cet instant t des paramètres correctifs relatifs aux conditions de roulage dudit véhicule, comprenant notamment la température et la pression internes audit pneumatique, la charge et le couple moteur ou freineur appliqués audit pneumatique, et
- un ordinateur de bord prévu pour fournir une valeur théorique R_{th,t} du rayon de roulement à cet instant t par le rapport distance parcourue / nombre de tours de roue à cet instant t, pour calculer ladite valeur estimée R_{e,t} du rayon de roulement à cet instant t à partir de la valeur théorique R_{th,t} et des paramètres correctifs, pour calculer le rapport de cette valeur estimée R_{e,t} à la valeur estimée R_{e,t0} du rayon de roulement audit instant t₀ et pour en déduire ledit rapport d'usure moyenne.

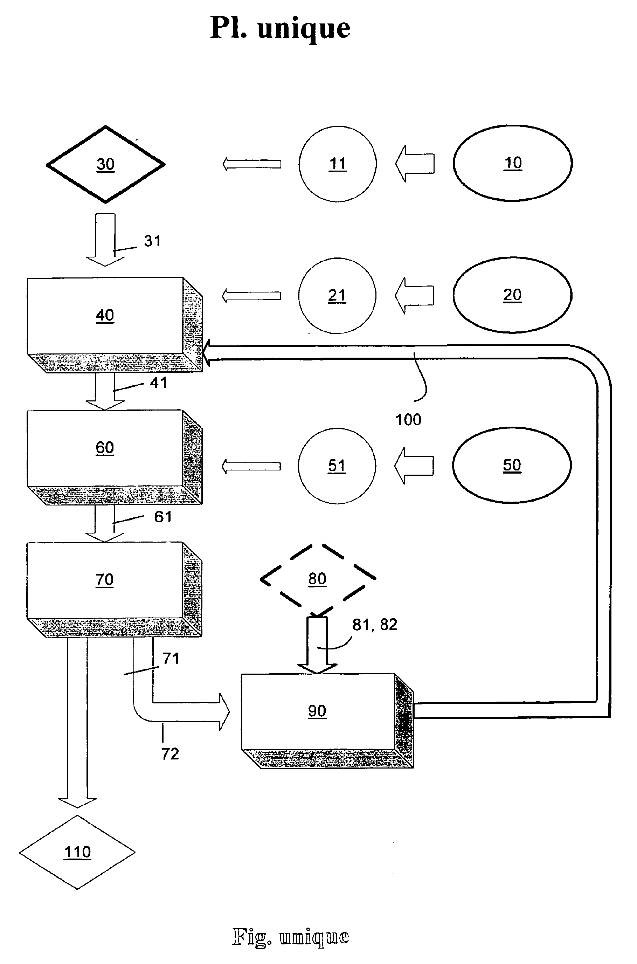

Avantageusement, lesdits premiers moyens comportent un système de freinage antiblocage « ABS » associé à un dispositif électronique de stabilité programmé « ESP ».
Egalement à titre avantageux, lesdits seconds moyens sont prévus pour mesurer ladite distance parcourue soit d'une manière directe par l'intermédiaire d'un radar de recul, soit d'une manière indirecte par l'intermédiaire d'un système mondial de positionnement « GPS », soit à partir du rapport vitesse réelle du véhicule / vitesse angulaire de la roue. Dans ce dernier cas, ledit rapport vitesse réelle du véhicule / vitesse angulaire de la roue est avantageusement donné par l'association d'un radar anti-collision à un système de freinage antiblocage « ABS ».
Les caractéristiques précitées de la présente invention, ainsi que d'autres, seront mieux comprises à la lecture de la description suivante d'un exemple de réalisation de l'invention, donné à titre illustratif et non limitatif, la description étant réalisée en relation avec le dessin joint, dans lequel :
La Fig. unique est un diagramme à blocs illustrant les éléments constitutifs essentiels, selon un exemple de réalisation de l'invention, d'un système pour la prédiction de l'usure d'au moins un pneumatique équipant un véhicule terrestre à moteur, et les étapes principales d'un procédé de prédiction de l'usure mis en oeuvre au moyen de ce système.

Comme on peut le voir à la Fig. unique, un système de prédiction de l'usure selon un exemple de réalisation de l'invention comporte essentiellement :
- à titre optionnel seulement : une mémoire de parcours 10 à lecture et à écriture contenant une base de données relative à une pluralité de parcours pour véhicules terrestres à moteur, par exemple des circuits de type routiers ou autoroutiers ;
- une mémoire de véhicules 20 à lecture et à écriture contenant une base de données relative à une pluralité de véhicules terrestres à moteur pourvus chacun de pneumatiques montés sur des roues, cette base de données comprenant notamment, pour chaque véhicule, sa masse, ses caractéristiques géométriques (telles que la hauteur de son centre de gravité, son empattement, sa voie, ses réglages initiaux en pince et en carrossage, la caractérisation é lasto-cinématique de sa liaison au sol), et ses caractéristiques de rigidité de dérive ;
- des moyens de mesure 30 prévus pour mesurer en temps réel et à chaque tour de roue ou à des intervalles de temps donnés, des sollicitations de roulage 31 qui sont appliquées au centre de gravité de l'un quelconque de ces véhicules en roulage (optionnellement à partir de paramètres 11 contenus dans la mémoire 10 caractérisant l'un desdits parcours sélectionné) et qui comprennent notamment les intensités des accélérations longitudinales γₓ et transversales γ_{y} ou bien les forces correspondantes Fₓ et F_{y}, la vitesse V du véhicule mesurée également au centre de gravité et/ou la charge transportée, ou bien des moyens de mesure (non représentés) prévus pour mesurer directement des caractéristiques de roue 41 comprenant les efforts appliqués au centre de la roue dans les directions X, Y et Z et les angles de carrossage γ et de dérive δ ;
- seulement dans le cas de l'utilisation desdits moyens de mesure 30 :
   une unité de traitement 40 prévue pour traiter les sollicitations de roulage 31 mesurées à chaque tour de roue ou à ces intervalles de temps donnés par les moyens de mesure 30 en relation avec des paramètres 21 extraits de la mémoire 20 caractérisant spécifiquement le véhicule sélectionné, et pour en déduire à chaque tour de roue ou à ces intervalles de temps les caractéristiques de roue 41,
- au moins une mémoire de pneumatiques 50 à lecture et à écriture contenant une base de données relative à une pluralité de pneumatiques différents, telles que leurs dimensions et les caractéristiques géométriques et mécaniques de chacune de leurs sculptures i,
- une unité de traitement 60 prévue pour traiter les caractéristiques de roue 41 en relation avec des paramètres 51 extraits de la mémoire 50 caractérisant spécifiquement le pneumatique monté sur la roue, et pour en déduire à chaque tour de roue ou à ces intervalles de temps donnés des caractéristiques 61 de sculptures i caractérisant l'aire de contact du pneumatique avec le sol de roulage qui sont représentatives des efforts appliqués sur chaque sculpture i dans les directions X, Y et Z,
- une unité de traitement 70 prévue pour prédire, à partir desdites caractéristiques 61 de sculptures i et éventuellement de paramètres relatifs au sol de roulage tels que son caractère sec ou mouillé et/ou de la température dudit sol, des caractéristiques instantanées d'usure 71 représentatives de l'usure à chaque tour de roue de chaque sculpture i, et pour cumuler sur un cycle de période T déterminée ces caractéristiques instantanées d'usure prédites 71, de sorte à fournir au conducteur du véhicule des informations cumulées d'usure 72 suite à ce cycle de roulage qui sont prédites pour chaque sculpture i (ou au moins pour la sculpture i dont l'usure prédite est la plus prononcée),
- optionnellement, des moyens 80 montés sur ledit véhicule et prévus pour mesurer à un instant donné l'usure réelle de chaque sculpture i (usure locale) ou bien l'usure globale du pneumatique (i.e. moyenne sur une section axiale du pneumatique), cette usure locale ou globale pouvant avantageusement être mesurée d'une manière continue à chaque tour de roue ou bien d'une manière discrète en étant par exemple cumulée sur ladite période T, en fournissant des valeurs réelles d'usure 81 ou 82 (respectivement instantanées ou cumulées),
- une unité de recalage 90 prévue pour intégrer les valeurs réelles d'usure 81 ou 82, pour comparer les valeurs prédites d'usure 72 aux valeurs réelles d'usure correspondantes 82 et pour modifier lors du cycle de prédiction suivant le traitement par l'unité 40 des sollicitations de roulage 31 (voir flèche 100 représentant cette « initialisation » de l'unité de traitement 40), et
- un ordinateur de bord 110 installé dans l'habitacle du véhicule qui est relié à ladite unité de traitement 70, qui est destiné à informer le conducteur du véhicule de l'usure d'au moins un pneumatique à un instant donné, ou de la durée d'usage restante ou encore du kilométrage restant qui en résultent, et/ou qui est destiné à fournir les caractéristiques d'usure prédites à des algorithmes de pilotage que comporte le système de sécurité du véhicule, ces algorithmes étant prévus pour commander des systèmes d'aide à la conduite tels que des systèmes « ABS » ou « ESP ».

La mémoire 20 contenant la base de données relative aux véhicules comporte par exemple les paramètres 21 suivants pour chaque véhicule :
- Masse supportée par l'essieu avant (kg),
- Masse supportée par l'essieu arrière (kg),
- Type de transmission : traction ou propulsion,
- Empattement : distance entre l'essieu avant et l'essieu arrière : E en m,
- Voies (avant/ arrière) : distances entre centres roue gauche et droit : V 1 et V2 en m,
- Raideurs de l'essieu (avant/ arrière) : KZ1 et KZ2 en N/m,
- Raideurs d'antiroulis (avant/ arrière) : C1 et C2 en Nm/rad,
- Pinces statiques à la roue (avant/ arrière) : B10 et B20 en degrés,
- Coefficients de braquage induit sous débattement vertical (avant/arrière) : B11/B21, degrés/m,
- Carrossages statiques (avant/ arrière) : G10 et G20 en degrés,
- Coefficients de carrossage induit sous débattement vertical (avant/arrière): G11/G21, degrés/m,
- Coefficients de carrossage induit par le roulis (avant/arrière) : GB1, GB2 (degrés/degrés),
- Hauteurs du centre de gravité, des centres de roulis avant/arrière : HG, H01, H02 en m,
- Taux d'anti-plongée (%),
- Taux d'anti-cabrage (%),
- Taux de répartition de freinage : % de l'effort freineur total passé sur l'essieu avant,
- Vitesse de roulage du véhicule (V en km/h),
- Coefficient aérodynamique,
- Coefficient de résistance au roulement (%),
- Accélération de la pesanteur : 9,81 en m/s²,
- Bras de levier du couple d'auto-alignement : en m,
- Angle de dérive à poussée nulle : dy0 en degrés.

Les moyens de mesure 30 comportent des accéléromètres ou des dynamomètres respectivement prévus pour mesurer à chaque tour de roue ou à des intervalles e temps donnés les intensités des accélérations longitudinales γₓ et transversales γ_{y} ou bien des forces correspondantes Fₓ et F_{y} appliquées au centre de gravité d'un véhicule donné, ces valeurs d'accélérations ou de forces étant fournies par exemple sous forme de bi-histogrammes γₓ / γ_{y} ou Fₓ / F_{y} (abscisse/ordonnée) construits à la fréquence spatiale du tour de roue ou par intégration temporelle. On notera que ces accélérations ou ces forces peuvent aussi être obtenues à partir de systèmes «ABS»,«ESP»ou«GPS».

Comme indiqué précédemment, on notera que ces moyens de mesure 30 pourraient être remplacés par des moyens prévus pour mesurer directement les caractéristiques de roue 41 (comprenant les efforts appliqués au centre de la roue dans les directions X, Y et Z et les angles de carrossage γ et de dérive δ) à partir de la mesure des trois composantes de la résultante d'efforts exercés par le sol de roulage sur l'aire de contact du pneumatique, laquelle est déterminée par traitement d'au moins deux mesures d'extension ou de contraction circonférentielle dans au moins un flanc du pneumatique en deux points fixes dans l'espace, situés à des azimuts différents le long de la circonférence. Cette contraction ou extension circonférentielle des flancs est avantageusement estimée par la mesure de la distance entre les fils de la nappe carcasse des flancs. On se reportera au document de brevet WO-A-03/014693 au nom des demanderesses pour une description détaillée de cette mesure des caractéristiques de roue 41 à partir des efforts dans l'aire de contact.

L'unité optionnelle de traitement 40 est par exemple prévue pour traiter ce bi-histogramme d'accélérations ou de forces et pour en déduire à chaque tour de roue ou à ces intervalles de temps donnés les efforts appliqués au centre roue dans lesdites directions X, Y, Z et les angles de carrossage γ et de dérive δ (la vitesse V du véhicule étant entrée ou pas dans cette unité 40 comme une constante dépendant du circuit choisi). Pour le calcul des efforts appliqués au centre roue, les données d'entrée sont ces accélérations γₓ et γ_{y}, la charge statique du véhicule et éventuellement la vitesse et l'angle au volant, et l'on calcule dans un premier temps les efforts appliqués sur chaque essieu.
Tout d'abord, à partir de la charge globale du véhicule et de sa géométrie, sont déterminés les efforts Z par essieu. Puis, à partir de l'accélération γ_{y} et de la géométrie du véhicule, sont déterminés les efforts Y par essieu.
Ensuite, à partir de l'accélération γₓ, de la géométrie du véhicule, de la loi de freinage et des répartitions de motricité, sont calculés les efforts X par essieu. En effet, le véhicule est soumis à une force de résistance aérodynamique, à la résistance au roulement de l'essieu avant et de l'essieu arrière et à une force de couple motrice ou freineuse (la distribution de cette force entre l'essieu avant et l'essieu arrière dépendant de la conception du véhicule et, dans le cas du freinage, la loi de freinage définit la répartition avant/arrière de cette force).
A partir des efforts X par essieu, on détermine les efforts X par roue.
Puis sont calculés les efforts Z par roue, en prenant en compte les transferts de charge longitudinaux et transversaux. En effet, la charge verticale totale sur une roue est la somme de la charge statique sur la roue (égale à la moitié de la charge sur l'essieu) et des variations de charge respectivement dues aux transferts de charge longitudinal (équilibre en tangage) et transversal (équilibre en roulis).
A partir de là sont calculés les efforts Y par roue, via le calcul de la somme des braquages induits et des carrossages induits (induits par le roulis et sous débattement vertical), de la dérive des roues arrières (calcul de la dérive de caisse et des efforts Y des roues arrière) et des angles de dérive des roues avant (calcul de l'angle de braquage volant et des efforts Y des roues avant).

La mémoire de pneumatiques 50 contenant la base de données de pneumatiques contient notamment des paramètres pour chaque pneumatique, tels que le diamètre intérieur « au seat » du pneumatique, son diamètre extérieur H, sa largeur axiale B et son rapport de forme H/B, et les caractéristiques géométriques et mécaniques de chaque sculpture i comprenant notamment les hauteurs de gomme hᵢ, le taux d'entaillage (également appelé « taux de vide ») de chaque sculpture i dans l'aire de contact, et les rigidités Rxᵢ et Ryᵢ de la sculpture i dans les directions X et Y.
L'unité de traitement 60 est prévue pour traiter les informations d'efforts appliqués au centre roue et les angles de carrossage et de dérive en relation avec ces paramètres de pneumatique 51 extraits de la mémoire 50, via un modèle ou loi de pneumatique, pour en déduire à chaque tour de roue ou à ces intervalles de temps donnés lesdites caractéristiques de sculptures 61 dans l'aire de contact du pneumatique avec le sol de roulage, comme par exemple :
- les efforts fₓᵢ, f_{yi}, f_{zi} sur chaque sculpture i dans les directions X, Y, Z, respectivement, et
- la longueur Lᵢ et la largeur lᵢ de chaque sculpture i dans l'aire de contact.

On notera que la mémoire de parcours précitée 10 à titre optionnel peut servir au « recalage » des unités de traitement 40 ou 60, pour tenir compte de la spécificité du sol de roulage, par exemple.
L'unité de traitement 70 est prévue pour prédire via un modèle ou loi d'usure telle que la loi d'Archard bien connue de l'homme du métier J.F. ARCHARD (voir à ce sujet l'article «Contact and rubbing of flat surfaces », J. Appl. Phys., 24 (1953) 981-988), à partir de ces caractéristiques 61 des sculptures i dans l'aire de contact et éventuellement du caractère plus ou moins sec ou mouillé d u sol de roulage et de la température dudit sol, lesdites caractéristiques instantanées d'usure 71 de chaque sculpture i représentatives de l'usure à chaque tour de roue ou à ces intervalles de temps.
Ces caractéristiques d'usure 71, telles que la perte de hauteur absolue ou relative de chaque sculpture i o u la vitesse d'usure d e c elle-ci, sont notamment fonction de la longueur g lissée d e chaque sculpture i dans l'aire de contact, des efforts précités fₓᵢ, f_{yi}, f_{zi} sur chaque sculpture i, de l'abrasion du matériau constituant chaque sculpture i, de la longueur Lᵢ et de la largeur lᵢ de celle-ci.
On notera que l'unité de traitement 70 peut fournir des informations d'usure globales ou bien discriminées par zones du pneumatique (i.e. concernant la totalité ou bien une ou plusieurs zones dudit pneumatique qui sont par exemple réparties sur la largeur axiale de celle-ci, telles que les épaules et/ou une ou plusieurs zones admettant pour plan de symétrie le plan circonférentiel médian du pneumatique ou bien situées de part et d'autre de ce plan entre lesdites épaules).

Comme indiqué précédemment, on obtient lesdites informations d'usure 72 prédites sur un cycle de période T en cumulant sur le nombre de tours compris dans ce cycle ou par intégration temporelle ces informations instantanées 71. Comme indiqué ci-dessus, on notera que ces informations cumulées 72 obtenues peuvent être globales ou bien discriminées par zones du pneumatique.

On compare ensuite via l'unité de recalage 90 ces informations prédites 72 à des informations d'usure 82 intégrées préalablement dans l'unité de recalage et ayant été directement obtenues :
- soit par l'intermédiaire d'un constat visuel à l'arrêt du véhicule réalisé par le conducteur de ce dernier ou par un spécialiste extérieur, par exemple,
- soit avantageusement par l'intermédiaire desdits moyens 80 de mesure de l'usure du pneumatique, en continu ou en discontinu (à l'arrêt et/ou en roulage du véhicule), dont est pourvu le véhicule pour informer en temps réel le conducteur de l'atteinte d'un ou plusieurs seuils prédéterminés d'usure, soit sur au moins une sculpture i, soit en moyenne sur une section axiale du pneumatique.

Lorsque le système est prévu pour utiliser des valeurs réelles d'usure cumulées obtenues par l'intermédiaire d'un constat visuel ou de mesures indépendantes du véhicule, par exemple avec un profondimètre, il comprend des moyens pour recevoir simplement ces valeurs et les intégrer en mémoire. Ces moyens peuvent comprendre une prise sur laquelle on peut venir connecter un boîtier avec un clavier pour les rentrer manuellement. On peut aussi envisager de connecter directement le système et un appareil extérieur de mesure via cette prise.

A titre de moyens 80 de mesure de l'usure sur au moins une sculpture i du pneumatique (ou sur chacune des sculptures i), on utilise avantageusement ceux décrits dans les demandes de brevet internationales précitées : PCT/EP02/10936, PCT/EP02/12262, PCT/EP03/00888 et PCT/EP03/00557.

A titre de moyens 80 de mesure de l'usure moyenne sur une section axiale du pneumatique, on utilise avantageusement des moyens destinés à estimer la valeur R_{e,t} du rayon de roulement du pneumatique à un instant t, puis à comparer cette valeur estimée R_{e,t} à au moins une valeur de référence R_{e,t0} pour ce rayon de roulement correspondant à un degré déterminé d'usure du même pneumatique à un instant antérieur t₀ (correspondant par exemple à une usure nulle du pneumatique) en calculant le rapport R_{e,t} / R_{e,t0}, puis à déduire de ce rapport R_{e,t} / R_{e,t0} le rapport d'usure moyenne sur une section axiale du pneumatique qui est égal à la hauteur moyenne hₜ des sculptures à l'instant t sur leur hauteur moyenne hₜ₀ à l'instant t₀, par l'intermédiaire d'une loi d'usure spécifique au pneumatique.
Ces moyens 80 de mesure du rayon de roulement du ou des pneumatiques comportent essentiellement, dans le véhicule qui en est équipé :
- des premiers moyens pour mesurer à un instant t donné le nombre de tours de la roue sur laquelle est montée le ou chaque pneumatique depuis un instant de référence t₀, comportant avantageusement un système ABS associé à un système ESP, ces deux systèmes permettant d'obtenir une précision de mesure du nombre de tours de roue à environ 1/48 ou 1/96 de tour près ;
- des seconds moyens pour mesurer à cet instant t la distance parcourue par le véhicule depuis cet instant t₀, soit d'une manière directe par l'intermédiaire d'un radar de recul (comportant d'une manière connue des capteurs d'ultrasons), soit d'une manière indirecte par l'intermédiaire d'un système GPS (« global positioning system » ou système mondial de positionnement), soit encore à partir du rapport vitesse réelle du véhicule / vitesse angulaire de la roue qui peut être donné par l'association d'un radar anti-collision à un système ABS ;
- des troisièmes moyens pour mesurer à cet instant t des paramètres correctifs relatifs aux conditions de roulage du véhicule, ces troisièmes moyens comprenant notamment la température et la pression internes au pneumatique, la charge et le couple moteur ou freineur appliqués à ce pneumatique,
- un ordinateur de bord prévu pour fournir, pour le ou chaque pneumatique considéré :
   - une valeur théorique R_{th,t} du rayon de roulement à l'instant t, donnée par le rapport de la distance parcourue au nombre de tours de roue,
   - une valeur estimée R_{e,t} (i.e. corrigée) du rayon de roulement de ce pneumatique à partir de ladite valeur théorique R_{th,t} et desdits paramètres correctifs,
   - le rapport de cette valeur estimée R_{e,t} à la valeur estimée R_{e,t0} du rayon de roulement du même pneumatique audit instant de référence t₀,
   - le rapport d'usure globale (i.e. en moyenne sur la section du pneumatique) égal à la hauteur moyenne h, des sculptures à l'instant t sur leur hauteur moyenne hₜ₀ à l'instant t₀, à partir dudit rapport R_{e,t} / R_{e,t0} et par l'intermédiaire d'une loi d'usure empirique spécifique à ce pneumatique.

Toujours en référence à la Fig. unique, on corrige ensuite lors du cycle de mesure suivant, via l'unité de recalage 90, le traitement par l'unité 40 des sollicitations de roulage 31, par exemple en tenant compte de la différence ou du quotient existant entre ces valeurs prédites et mesurées ou encore en utilisant la caractéristique de vitesse d'usure sur les derniers kilomètres parcourus, pour corriger la caractéristique d'usure prédite cumulée, de telle sorte qu'un nouveau cycle de prédictions puisse être réalisé (toujours pour la globalité du pneumatique ou bien seulement pour certaines zones de celui-ci).

L'ordinateur de bord 110 informe en continu ou sur demande le conducteur du véhicule de l'usure correspondant soit à toutes les sculptures ou à celle(s) d'entre elles qui est ou sont le plus usée(s), soit aux sculptures ou à celle(s) d'entre elles qui est ou sont le plus usée(s) sur une ou plusieurs zones du pneumatique dans une section axiale de celle-ci. Cet ordinateur 110 peut également informer le conducteur de la durée d'usage restante ou encore du kilométrage restant compte tenu de cette usure, et/ou adapter des paramètres de pilotage de systèmes d'aide à la conduite tels que des systèmes « ABS » ou « ESP ».

## Revendications

1. Procédé pour prédire l'usure d'au moins un pneumatique dont la bande de roulement comporte des sculptures et qui équipe un véhicule terrestre à moteur, comprenant les étapes successives suivantes :
(i) l'obtention à chaque tour de roue ou à des intervalles de temps donnés de caractéristiques de roue (41) relatives à au moins une roue comprenant les efforts appliqués au centre de cette roue dans les directions longitudinale, transversale et verticale et les angles de carrossage γ et de dérive δ,
(ii) un traitement desdites caractéristiques de roue (41) en relation avec des paramètres (51) caractérisant le pneumatique montée sur ladite roue, pour l'obtention à chaque tour de roue ou à ces intervalles de temps donnés de caractéristiques de contact (61) desdites sculptures caractérisant l'aire de contact dudit pneumatique avec le sol de roulage qui sont représentatives des efforts appliqués sur chaque sculpture dans lesdites directions longitudinale, transversale et verticale, et
(iii) un traitement des caractéristiques de contact (61) pour prédire des caractéristiques instantanées d'usure (71) représentatives de l'usure de chaque sculpture à chaque tour de roue ou à ces intervalles de temps donnés, et une sommation de ces caractéristiques instantanées sur une période donnée pour obtenir, pour chaque sculpture, des caractéristiques prédites d'usure cumulée,
**caractérisé en ce qu'**il comprend en outre les étapes successives suivantes :
(iv) une mesure à un instant donné d'au moins une caractéristique réelle d'usure cumulée (82) du pneumatique sur au moins l'une des sculptures ou en moyenne sur une section axiale du pneumatique,
(v) une comparaison d'au moins l'une desdites caractéristiques prédites cumulées (72) obtenues en (iii) à la caractéristique réelle (82) correspondante mesurée en (iv), et
(vi) une prise en compte du résultat de la comparaison prévue en (v) pour la réalisation d'un nouveau cycle de prédiction de caractéristiques corrigées d'usure instantanée et d'usure cumulée.

2. Procédé pour prédire l'usure d'au moins un pneumatique selon la revendication 1, tel qu'il comprend, antérieurement à ladite étape (i) :
- une mesure en temps réel et à chaque tour de roue ou auxdits intervalles de temps donnés, de sollicitations de roulage (31) qui sont appliquées au centre de gravité dudit véhicule en roulage sur ce parcours et qui comprennent les intensités des accélérations longitudinales γₓ et transversales γ_{y} ou bien les forces longitudinales et transversales correspondantes Fₓ et F_{y}, puis
- un traitement desdites accélérations ou forces mesurées à chaque tour de roue ou à ces intervalles de temps en relation avec des paramètres (21) caractérisant le véhicule, pour l'obtention à chaque tour de roue ou à ces intervalles de temps desdites caractéristiques (41) visées à ladite étape (i).

3. Procédé pour prédire l'usure d'au moins un pneumatique selon la revendication 2, tel que lesdites sollicitations de roulage comprennent également la vitesse V dudit véhicule mesurée également audit centre de gravité et/ou la charge transportée par ledit véhicule.

4. Procédé pour prédire l'usure d'au moins un pneumatique selon la revendication 1, tel que lesdites caractéristiques de roue sont obtenues directement à ladite étape (i) à partir de la mesure des trois composantes de la résultante d'efforts exercés par le sol de roulage sur l'aire de contact dudit pneumatique, et tel que ladite mesure est déterminée par traitement d'au moins deux mesures d'extension ou de contraction circonférentielle dans au moins un flanc du pneumatique en deux points fixes dans l'espace, situés à des azimuts différents le long de la circonférence.

5. Procédé pour prédire l'usure d'au moins un pneumatique selon l'une des revendications 1 à 4, tel qu'il comprend la mesure en temps réel de réglages statiques comprenant la pince et le carrossage, antérieurement à ladite étape (iii).

6. Procédé pour prédire l'usure d'au moins un pneumatique selon l'une des revendications 1 à 5, tel que le traitement visé à ladite étape (iii) est en outre fonction de paramètres relatifs au sol de roulage tels que son caractère sec, humide ou mouillé et/ou dudit sol, pour la prédiction desdites caractéristiques instantanées d'usure (71).

7. Procédé pour prédire l'usure d'au moins un pneumatique selon l'une des revendications 1 à 6, tel que lesdites caractéristiques réelles d'usure cumulée (82) visées à ladite étape (iv) sont obtenues par un examen dudit pneumatique à l'arrêt dudit véhicule.

8. Procédé pour prédire l'usure d'au moins un pneumatique selon l'une des revendications 1 à 6, tel que lesdites caractéristiques réelles d'usure cumulée (82) visées à ladite étape (iv) sont obtenues par l'intermédiaire de moyens (80) de mesure de l'usure dudit pneumatique, en continu ou en discontinu, dont est pourvu ledit véhicule et qui sont destinés à informer en temps réel le conducteur dudit véhicule de l'atteinte d'un ou de plusieurs seuils prédéterminés d'usure sur au moins l'une desdites sculptures.

9. Procédé pour prédire l'usure d'au moins un pneumatique selon la revendication 8, tel que ladite étape (iv) consiste à réaliser une mesure de capacité ou de résistance électrique à l'intérieur de ladite sculpture, et à en déduire la hauteur de cette sculpture par une relation reliant ladite capacité ou ladite résistance à cette hauteur.

10. Procédé pour prédire l'usure d'au moins un pneumatique selon la revendication 8, les sculptures dudit pneumatique étant reliées entre elles par des sillons et ledit véhicule comportant un châssis et un dispositif de suspension assurant une liaison flexible entre le châssis et la roue, tel que ladite étape (iv) consiste :
a) à effectuer à un instant donné une mesure d'une valeur représentative de la distance entre, d'une part, un premier point solidaire dudit dispositif de suspension qui fait face audit pneumatique et qui occupe une position ou une pluralité de positions telles que la projection orthogonale dudit premier point sur le plan circonférentiel médian dudit pneumatique reste à égale distance de celle de l'axe de ladite roue sur ledit plan, ou un second point solidaire dudit châssis qui fait face audit pneumatique, et, d'autre part, le sommet de l'une au moins desdites sculptures en regard dudit premier ou second point,
b) soit, dans un premier cas, à effectuer audit instant donné une mesure d'une valeur de référence représentative d'une distance mesurée entre ledit premier ou second point et le fond de l'un desdits sillons en regard dudit premier ou second point, soit, dans un second cas, à effectuer ultérieurement une mesure d'une autre valeur de référence représentative d'une distance mesurée entre ledit premier point et l'un desdits sommets, et
c) à comparer la valeur mesurée en a) à la valeur de référence mesurée en b) pour en déduire, dans ledit premier cas, une information d'usure représentative de la hauteur de ladite sculpture par mesure différentielle audit instant, et, dans ledit second cas, une information d'usure représentative de l'évolution de l'usure du sommet de ladite sculpture dans un intervalle de temps donné.

11. Procédé pour prédire l'usure d'au moins un pneumatique selon la revendication 8, **caractérisé en ce que** ladite étape (iv) comprend l'affectation, à une variable discrète d'impédance représentative de l'impédance d'un circuit accordé passif contenu dans l'une au moins desdites sculptures, d'une variable discrète d'usure représentative de l'usure de ladite sculpture.

12. Procédé pour prédire l'usure d'au moins un pneumatique selon la revendication 8, tel que ladite étape (iv) comprend l'affectation, à une variable d'énergie représentative de l'énergie d'un rayonnement électromagnétique, tel que la lumière visible, transmis de l'espace extérieur à l'espace intérieur dudit pneumatique à travers l'une au moins desdites sculptures, d'une variable d'usure représentative de l'usure de ladite ou desdites sculptures.

13. Procédé pour prédire l'usure d'au moins un pneumatique selon la revendication 12, tel que ladite variable d'énergie est elle-même représentative de l'affleurement d'un moyen de transmission de rayonnements électromagnétiques à la surface du sommet dudit élément.

14. Procédé pour prédire l'usure d'au moins un pneumatique selon l'une des revendications 1 à 6, tel que lesdites caractéristiques réelles d'usure cumulée (82) visées à ladite étape (iv) sont obtenues par l'intermédiaire de moyens (80) prévus sur ledit véhicule pour la mesure de l'usure moyenne desdites sculptures sur une section axiale dudit pneumatique.

15. Procédé pour prédire l'usure d'au moins un pneumatique selon la revendication 14, tel que ladite étape (iv) consiste successivement :
- à estimer la valeur R_{e,t} du rayon de roulement dudit pneumatique à un instant t,
- à comparer cette valeur estimée R_{e,t} à au moins une valeur de référence R_{e,t0} pour ce rayon de roulement correspondant à un degré déterminé d'usure du même pneumatique à un instant antérieur t₀, en calculant le rapport R_{e,t}/ R_{e,t0},
- à déduire de ce rapport R_{e,t} / R_{e,t0} le rapport d'usure moyenne sur une section axiale du pneumatique qui est égal à la hauteur moyenne h, des sculptures à l'instant t sur leur hauteur moyenne hₜ₀ à l'instant t₀, par l'intermédiaire d'une loi d'usure spécifique audit pneumatique.

16. Procédé pour prédire l'usure d'au moins un pneumatique selon la revendication 15, tel que ladite valeur R_{e,t} du rayon de roulement dudit pneumatique à un instant t est estimée par :
- la mesure à un instant t donné du nombre de tours de la roue sur laquelle est montée ledit pneumatique depuis ledit instant antérieur t₀,
- la mesure à cet instant t de la distance parcourue par ledit véhicule depuis ledit instant antérieur t₀,
- l'obtention d'une valeur théorique R_{th,t} du rayon de roulement à cet instant t par le rapport de ladite distance parcourue sur ledit nombre de tours de roue audit instant t,
- la mesure à cet instant t de paramètres correctifs relatifs aux conditions de roulage dudit véhicule, comprenant notamment la température et la pression internes audit pneumatique, la charge et le couple moteur ou freineur appliqués audit pneumatique, et
- le calcul de ladite valeur estimée R_{e,t} du rayon de roulement dudit pneumatique audit instant t à partir de ladite valeur théorique R_{th,t} et desdits paramètres correctifs.

17. Procédé pour prédire l'usure d'au moins un pneumatique selon l'une des revendications 1 à 16, tel que ladite étape (vi) comprend une initialisation de ladite ou chaque caractéristique prédite cumulée (72) obtenue en (iii) pour le cycle suivant de prédiction, compte tenu de la différence existant entre la valeur de ladite ou chaque caractéristique prédite cumulée (72) et celle de la caractéristique réelle d'usure cumulée (82) correspondante mesurée en (iv).

18. Procédé pour prédire l'usure d'au moins un pneumatique selon l'une des revendications 1 à 16, tel que ladite étape (vi) comprend une correction adaptative des traitements prévus auxdites étapes (ii) et (iii) lors du cycle suivant de prédiction, compte tenu du rapport entre ladite ou chaque caractéristique prédite cumulée (72) obtenue en (iii) et la caractéristique réelle d'usure cumulée correspondante mesurée en (iv).

19. Procédé pour prédire l'usure d'au moins un pneumatique selon l'une des revendications 1 à 16, tel que ladite étape (vi) comprend une correction de ladite ou chaque caractéristique prédite cumulée (72) obtenue en (iii) compte tenu de la vitesse d'usure dudit pneumatique sur les derniers kilomètres parcourus.

20. Procédé pour prédire l'usure d'au moins un pneumatique selon l'une des revendications 1 à 19, tel que lesdites caractéristiques prédites d'usure instantanées et/ou lesdites caractéristiques d'usure cumulée obtenues en (iii) sont représentatives d'une ou plusieurs zones axiales circonférentielles déterminées de ladite bande de roulement.

21. Procédé pour prédire l'usure d'au moins un pneumatique selon l'une des revendications 1 à 20, tel qu'il comprend l'information en temps réel du conducteur dudit véhicule de l'usure, soit de toutes les sculptures, soit de celle(s) d'entre elles le plus usées.

22. Système de prédiction de l'usure pour la mise en oeuvre du procédé de prédiction selon l'une des revendications précédentes, **caractérisé en ce que** ledit système comporte essentiellement :
- une mémoire de véhicules (20) à lecture et à écriture contenant une base de données relative à une pluralité de véhicules terrestres à moteur pourvus chacun de pneumatiques montés sur des roues, cette base de données comprenant, pour chaque véhicule, sa masse, ses caractéristiques géométriques et ses caractéristiques de rigidité de dérive,
- des moyens pour obtenir, à chaque tour de roue ou à des intervalles de temps donnés, des caractéristiques de roue (41) relatives à au moins une roue comprenant les efforts appliqués au centre de cette roue dans les directions longitudinale X, transversale Y et verticale Z et les angles de carrossage γ et de dérive δ,
- une mémoire de pneumatiques (50) à lecture et à écriture contenant une base de données relative à une pluralité de pneumatiques différents, telles que leurs dimensions et les caractéristiques géométriques et mécaniques de chacune de leurs sculptures,
- une première unité de traitement (60) prévue pour traiter lesdites caractéristiques de roue (41) en relation avec des paramètres de pneumatique (51) extraits de ladite mémoire de pneumatique (50) caractérisant le pneumatique monté sur ladite roue, et pour en déduire à chaque tour de roue ou à ces intervalles de temps donnés des caractéristiques de contact (61) desdites sculptures caractérisant l'aire de contact dudit pneumatique avec le sol de roulage dudit parcours qui sont représentatives des efforts appliqués sur chaque sculpture dans lesdites directions X, Y et Z,
- une seconde unité de traitement (70) prévue pour prédire, à partir desdites caractéristiques de contact (61), des caractéristiques instantanées d'usure (71) représentatives de l'usure de chaque sculpture à chaque tour de roue ou à ces intervalles de temps donnés, et pour cumuler sur une période donnée ces caractéristiques instantanées (71), de sorte à obtenir pour chaque sculpture des caractéristiques prédites d'usure cumulée (72), et
- une unité de recalage (90) prévue pour intégrer à un instant donné au moins une caractéristique réelle d'usure cumulée (82) du pneumatique sur au moins l'une des sculptures ou en moyenne sur une section axiale dudit pneumatique, pour comparer au moins l'une desdites caractéristiques prédites d'usure cumulée (72) à la caractéristique d'usure réelle correspondante (82) et pour prendre en compte le résultat de cette comparaison en vue de la réalisation d'un nouveau cycle de prédiction de caractéristiques corrigées d'usure instantanée et d'usure cumulée, ladite caractéristique réelle d'usure cumulée (82) pouvant provenir de moyens de mesure montés ou non sur le véhicule.

23. Système de prédiction de l'usure selon la revendication 22, tel qu'il comporte en outre :
- des moyens de mesure (30) prévus pour mesurer en temps réel et à chaque tour de roue ou à ces intervalles de temps donnés, des sollicitations de roulage (31) qui sont appliquées au centre de gravité du véhicule en roulage, et qui comprennent les intensités des accélérations longitudinales γₓ et transversales γ_{y} ou bien les forces longitudinales et transversales correspondantes Fₓ et F_{y}, et
- une troisième unité de traitement (40) prévue pour traiter lesdites accélérations ou lesdites forces mesurées à chaque tour de roue ou à ces intervalles de temps en relation avec lesdits paramètres de véhicule (21), pour l'obtention à chaque tour de roue ou à ces intervalles desdites caractéristiques de roue (41).

24. Système de prédiction de l'usure selon la revendication 23, tel que lesdites sollicitations de roulage (31) comprennent également la vitesse V dudit véhicule mesurée également audit centre de gravité et/ou la charge transportée par ledit véhicule.

25. Système de prédiction de l'usure selon la revendication 22, tel qu'il comporte des moyens prévus pour mesurer directement lesdites caractéristiques de roue à partir de la mesure des trois composantes de la résultante d'efforts exercés par le sol de roulage sur l'aire de contact dudit pneumatique, et tel que ladite mesure est déterminée par traitement d'au moins deux mesures d'extension ou de contraction circonférentielle dans au moins un flanc du pneumatique en deux points fixes dans l'espace, situés à des azimuts différents le long de la circonférence.

26. Système de prédiction de l'usure selon l'une des revendications 22 à 25, tel qu'il comprend en outre, en amont de ladite seconde unité de traitement (70), des moyens de mesure en temps réel de réglages statiques comprenant la pince et le carrossage.

27. Système de prédiction de l'usure selon l'une des revendications 22 à 26, tel que ladite seconde unité de traitement (70) est prévue pour prédire lesdites caractéristiques instantanées d'usure (71) en fonction de paramètres relatifs au sol de roulage tels que son caractère sec, humide ou mouillé et/ou de la température dudit sol.

28. Système de prédiction de l'usure selon l'une des revendications 22 à 27, tel qu'il comporte en outre des moyens (80) de mesure desdites caractéristiques réelles d'usure cumulée (82) montés sur ledit véhicule et destinés à informer en temps réel le conducteur dudit véhicule de l'atteinte d'un ou de plusieurs seuils prédéterminés d'usure sur au moins l'une desdites sculptures.

29. Système de prédiction de l'usure selon la revendication 28, tel que lesdits moyens de mesure (80) sont prévus pour mesurer la capacité ou la résistance électrique à l'intérieur de ladite sculpture, et pour en déduire la hauteur de ladite sculpture par une relation reliant ladite capacité ou ladite résistance à cette hauteur.

30. Système de prédiction de l'usure selon la revendication 28, tel que, les sculptures dudit pneumatique étant reliées entre elles par des sillons et ledit véhicule comportant un châssis et un dispositif de suspension assurant une liaison flexible entre le châssis et la roue, lesdits moyens de mesure (80) sont prévus pour :
a) effectuer à un instant donné une mesure d'une valeur représentative de la distance entre, d'une part, un premier point solidaire dudit dispositif de suspension qui fait face audit pneumatique et qui occupe une position ou une pluralité de positions telles que la projection orthogonale dudit premier point sur le plan circonférentiel médian dudit pneumatique reste à égale distance de celle de l'axe de ladite roue sur ledit plan, ou un second point solidaire dudit châssis qui fait face audit pneumatique, et, d'autre part, le sommet de l'une au moins desdites sculptures en regard dudit premier ou second point,
b) soit, dans un premier cas, effectuer audit instant donné une mesure d'une valeur de référence représentative d'une distance mesurée entre ledit premier ou second point et le fond de l'un desdits sillons en regard dudit premier ou second point, soit, dans un second cas, effectuer ultérieurement une mesure d'une autre valeur de référence représentative d'une distance mesurée entre ledit premier point et l'un desdits sommets, et pour
c) comparer la valeur mesurée au paragraphe a) à la valeur de référence mesurée au paragraphe b) pour en déduire, dans ledit premier cas, une information d'usure représentative de la hauteur de ladite sculpture par mesure différentielle audit instant, et, dans ledit second cas, une information d'usure représentative de l'évolution de l'usure du sommet de ladite sculpture dans un intervalle de temps donné.

31. Système de prédiction de l'usure selon la revendication 28, tel que lesdits moyens de mesure (80) sont prévus pour affecter, à une variable discrète d'impédance représentative de l'impédance d'un circuit accordé passif contenu dans l'une au moins desdites sculptures, une variable discrète d'usure représentative de l'usure de ladite sculpture.

32. Système de prédiction de l'usure selon la revendication 28, tel que lesdits moyens de mesure (80) sont prévus pour affecter, à une variable d'énergie représentative de l'énergie d'un rayonnement électromagnétique tel que la lumière visible transmis de l'espace extérieur à l'espace intérieur dudit pneumatique à travers l'une au moins desdites sculptures, une variable d'usure représentative de l'usure de ladite ou desdites sculptures.

33. Système de prédiction de l'usure selon la revendication 32, tel que ladite variable d'énergie est elle-même représentative de l'affleurement d'un moyen de transmission de rayonnements électromagnétiques à la surface du sommet dudit élément.

34. Système de prédiction de l'usure selon l'une des revendications 22 à 27, tel que lesdits moyens de mesure (80) sont prévus sur ledit véhicule pour mesurer l'usure moyenne desdites sculptures sur une section axiale dudit pneumatique.

35. Système de prédiction de l'usure selon la revendication 34, tel que lesdits moyens de mesure (80) sont prévus pour :
- estimer la valeur R_{e,t} du rayon de roulement dudit pneumatique à un instant t, puis
- comparer cette valeur estimée R_{e,t} à au moins une valeur de référence R_{e,t0} pour ce rayon de roulement correspondant à un degré déterminé d'usure du même pneumatique à un instant antérieur t₀, en calculant le rapport R_{e,t}/ R_{e,t0}, puis
- déduire de ce rapport R_{e,t} / R_{e,t0} le rapport d'usure moyenne sur une section axiale du pneumatique qui est égal à la hauteur moyenne hₜ des sculptures à l'instant t sur leur hauteur moyenne hₜ₀ à l'instant t₀, par l'intermédiaire d'une loi d'usure spécifique audit pneumatique.

36. Système de prédiction de l'usure selon la revendication 35, tel que ladite valeur R_{e,t} du rayon de roulement dudit pneumatique à un instant t est estimée par :
- des premiers moyens prévus pour mesurer à un instant t donné le nombre de tours de la roue sur laquelle est montée ledit pneumatique depuis ledit instant antérieur t₀,
- des seconds moyens prévus pour mesurer à cet instant t la distance parcourue par ledit véhicule depuis ledit instant antérieur t₀,
- des troisièmes moyens prévus pour mesurer à cet instant t des paramètres correctifs relatifs aux conditions de roulage dudit véhicule, comprenant notamment la température et la pression internes audit pneumatique, la charge et le couple moteur ou freineur appliqués audit pneumatique, et
- un ordinateur de bord prévu pour fournir une valeur théorique R_{th,t} du rayon de roulement à cet instant t par le rapport distance parcourue / nombre de tours de roue à cet instant t, pour calculer ladite valeur estimée R_{e,t} du rayon de roulement à cet instant t à partir de la valeur théorique R_{th,t} et des paramètres correctifs, pour calculer le rapport de cette valeur estimée R_{e,t} à la valeur estimée R_{e,t0} du rayon de roulement audit instant t₀ et pour en déduire ledit rapport d'usure moyenne.

37. Système de prédiction de l'usure selon la revendication 36, tel que lesdits premiers moyens comportent un système de freinage antiblocage « ABS » associé à un dispositif électronique de stabilité programmé « ESP ».

38. Système de prédiction de l'usure selon la revendication 36 ou 37, tel que lesdits seconds moyens sont prévus pour mesurer ladite distance parcourue d'une manière directe par l'intermédiaire d'un radar de recul.

39. Système de prédiction de l'usure selon la revendication 36 ou 37, tel que lesdits seconds moyens sont prévus pour mesurer ladite distance parcourue d'une manière indirecte par l'intermédiaire d'un système mondial de positionnement « GPS ».

40. Système de prédiction de l'usure selon la revendication 36 ou 37, tel que lesdits seconds moyens sont prévus pour mesurer ladite distance parcourue à partir du rapport vitesse réelle du véhicule / vitesse angulaire de la roue.

41. Système de prédiction de l'usure selon la revendication 40, tel que ledit rapport vitesse réelle du véhicule / vitesse angulaire de la roue est donné par l'association d'un radar anti-collision à un système de freinage antiblocage « ABS ».

## Claims

1. Method for predicting the wear of at least one tyre whose tread comprises pattern elements and which is fitted to a terrestrial motor vehicle, comprising the following successive stages:
(i) wheel characteristics (41) relating to at least one wheel, which include the forces applied at the wheel centre in the longitudinal, transverse and vertical directions and the camber γ and slip δ angles, are obtained for each revolution of the wheel or at given time intervals,
(ii) the said wheel characteristics (41) are treated in relation to parameters (51) that characterise the tyre mounted on the said wheel to obtain, for each wheel revolution or for the said given time intervals, contact characteristics (61) of the said tread patterns that characterise the contact area of the tyre with the ground on which it is rolling, which represent forces applied on each tread pattern in the said longitudinal, transverse and vertical directions, and
(iii) the contact characteristics (61) are treated for the prediction of the instantaneous wear characteristics (71) that represent the wear of each tread pattern at each rotation of the wheel or at the given time intervals, and these instantaneous characteristics are summed over a given period to obtain the predicted cumulative wear characteristics for each tread pattern,
**characterised in that** it also comprises the following successive stages:
(iv) the measurement at a given instant of at least one actual cumulative wear characteristic (82) of the tyre on at least one of the tread pattern elements, or averaged over an axial section of the tyre,
(v) comparison of at least one of the said predicted cumulative characteristics (72) obtained in stage (iii) with the corresponding actual characteristic (82) measured in stage (iv), and
(vi) assessment of the result of the comparison carried out in stage (v) for the implementation of a new cycle of corrected instantaneous and cumulative wear characteristics.

2. Method for predicting the wear of at least one tyre according to Claim 1, comprising, before the said state (i):
- a measurement, in real time and for each wheel revolution or at given time intervals, of rolling parameters (31) applied at the vehicle's centre of gravity during rolling along a route, which include the intensities of the longitudinal γₓ and transverse γ_{y} accelerations or the corresponding longitudinal and transverse forces Fₓ and F_{y}, and then
- a treatment of these accelerations or forces measured for each wheel revolution or at the said given time intervals in relation to parameters (21) that characterise the vehicle, to obtain the characteristics (41) envisaged in stage (i) for each wheel revolution or at the said given time intervals.

3. Method for predicting the wear of at least one tyre according to Claim 2, such that the said rolling parameters also include the speed V of the said vehicle, also measured at its centre of gravity, and/or the load carried by the vehicle.

4. Method for predicting the wear of at least one tyre according to Claim 1, such that the said wheel characteristics are obtained directly during the said stage (i) by measuring the three components of the resultant of forces exerted by the ground surface over which the vehicle is rolling on the tyre's contact area, and such that the said measurement is determined by treatment of at least two measurements of the circumferential extension or contraction in at least one sidewall of the tyre at two points fixed in space, located at different azimuths along the circumference.

5. Method for predicting the wear of at least one tyre according to any of Claims 1 to 4, such that it comprises the measurement in real time of static adjustments that include the toe-in and camber, before the said stage (iii).

6. Method for predicting the wear of at least one tyre according to any of Claims 1 to 5, such that the treatment envisaged in the said stage (iii) is also a function of parameters relating to the rolling ground surface, such as whether it is dry, wet or damp and/or of the said rolling surface, for the prediction of the said instantaneous wear characteristics (71).

7. Method for predicting the wear of at least one tyre according to any of Claims 1 to 6, such that the said actual cumulative wear characteristics (82) envisaged in the said stage (iv) are obtained by examining the tyre when the vehicle is at rest.

8. Method for predicting the wear of at least one tyre according to any of Claims 1 to 6, such that the said actual cumulative wear characteristics (82) envisaged in stage (iv) are obtained using means (80) for the continuous or discontinuous measurement of the tyre wear, provided on the vehicle and designed to inform the vehicle's driver, in real time, when at least one of the said tread pattern elements has reached one or more predetermined wear thresholds.

9. Method for predicting the wear of at least one tyre according to Claim 8, such that the said stage (iv) consists in measuring the electric capacitance or resistance within the said tread pattern element and deducing therefrom the height of the tread pattern from a relationship that relates the said capacitance or resistance to the said height.

10. Method for predicting the wear of at least one tyre according to Claim 8, the tread pattern elements of the tyre being interconnected by grooves and the said vehicle comprising a chassis and a suspension system that ensures a flexible connection between the chassis and the wheel, such that the said stage (iv) then consists in the following:
a) at a given instant, a value is measured which represents the distance between, on the one hand, a first point on the said suspension system opposite the tyre and occupying a position or a plurality of positions such that the orthogonal projection of the said first point on the circumferential median plane of the tyre remains an equal distance from that of the axis of the wheel on the said plane, or a second point on the chassis opposite the tyre and, on the other hand, the top surface of at least one of the said tread pattern elements opposite the said first or second point,
b) either, in a first case, measuring at the said given instant a reference value that represents a distance measured between the said first or second point and the bottom of one of the said grooves opposite the said first or second point, or, in a second case, subsequently measuring another reference value that represents a distance between the said first point and one of the said top surfaces, and
c) comparing the value measured in paragraph a) with the reference value measured in paragraph b) in order to deduce, in the said first case a wear datum representing the height of the said tread pattern by differential measurement at the said instant, and in the said second case a wear datum representing the evolution of the wear of the top of the said pattern within a given time interval.

11. Method for predicting the wear of at least one tyre according to Claim 8, **characterised in that** the said stage (iv) then comprises the allocation, to a discrete impedance variable representing the impedance of a passive tuned circuit contained in at least one of the tread pattern elements, of a discrete wear variable representing the wear of the tread pattern.

12. Method for predicting the wear of at least one tyre according to Claim 8, such that the said stage (iv) then comprises the allocation, to an energy variable representing the energy of an electromagnetic radiation such as the visible light transmitted from the space outside the said tyre to the space inside it through at least one of the said tread pattern elements, of a wear variable representing the wear of the said pattern element(s).

13. Method for predicting the wear of at least one tyre according to Claim 12, such that the said energy variable itself corresponds to the exposure of a means for the transmission of electromagnetic radiations on the top surface of the said pattern element.

14. Method for predicting the wear of at least one tyre according to any of Claims 1 to 6, such that the said actual cumulative wear characteristics (82) envisaged in the said stage (iv) are obtained via measurement means (80) provided on the vehicle for measuring the average wear of the said tread pattern elements over an axial section of the tyre.

15. Method for predicting the wear of at least one tyre according to Claim 14, such that the said stage (iv) consists, successively, in the following:
- estimation of the value R_{e,t} of the rolling radius of the tyre at an instant t,
- comparison of this estimated value R_{e, t} with at least one reference value R_{e, t0} for the rolling radius that corresponds to a given degree of wear of the same tyre at a previous time t₀, and calculation of the ratio Rₑ, ₜ/Rₑ, t₀,
- deduction from this ratio Rₑ, ₜ/Rₑ, t₀ of the average wear ratio over an axial section of the tyre, which is equal to the average height hₜ of the tread pattern elements at time t to their average height hₜ₀ at the time t₀, via a wear law specific to the said tyre.

16. Method for predicting the wear of at least one tyre according to Claim 15, such that the said value R_{e, t} of the tyre's rolling radius at time t is estimated by :
- measuring at a given time t the number of rotations of the wheel on which the tyre is mounted since the said earlier time t₀,
- measuring at the time t the distance travelled by the vehicle since the earlier time t₀,
- obtaining a theoretical value R_{th, t} of the rolling radius at the time t from the ratio of the said distance travelled to the said number of wheel rotations at time t,
- determination at time t of corrective parameters related to the vehicle's rolling conditions, in particular including the temperature and internal pressure of the tyre, the load and the drive or braking torque applied to the tyre, and
- calculating the said estimated value R_{e, t} of the tyre's rolling radius at the said time t from the said theoretical value R_{th, t} and from the said corrective parameters.

17. Method for predicting the wear of at least one tyre according to Claims 1 to 16, such that the said stage (vi) comprises an initialisation of the said or each predicted cumulative characteristic (72) obtained in stage (iii) for the next prediction cycle, taking into account the difference between the value of the said or each predicted cumulative characteristic (72) and that of the corresponding actual cumulative wear characteristic (82) measured in stage (iv).

18. Method for predicting the wear of at least one tyre according to any of Claims 1 to 16, such that the said stage (vi) comprises an adaptive correction of the treatments envisaged in the said stages (ii) and (iii) during the next prediction cycle, taking into account the ratio between the said or each predicted cumulative characteristic (72) obtained in stage (iii) and the corresponding actual cumulative wear characteristic measured in stage (iv).

19. Method for predicting the wear of at least one tyre according to any of Claims 1 to 16, such that the said stage (vi) comprises a correction of the said or each predicted cumulative characteristic (72) obtained in stage (iii) taking into account the wear rate of the tyre during the last few kilometres travelled.

20. Method for predicting the wear of at least one tyre according to any of Claims 1 to 19, such that the said predicted instantaneous wear characteristics and/or the said cumulative wear characteristics obtained in stage (iii) represent one or more given circumferential axial zones of the tyre tread concerned.

21. Method for predicting the wear of at least one tyre according to any of Claims 1 to 20, such that it comprises the provision of information in real time to the vehicle's driver, about the wear either of all the tread pattern elements or of those among them which have sustained most wear.

22. Wear prediction system for implementing the prediction method according to any of the preceding claims, **characterised in that** the said system comprises essentially:
- a RAM vehicle memory (20) containing a database that relates to a plurality of terrestrial motor vehicles each having tyres fitted on wheels, this database containing, for each vehicle, its mass, its geometrical characteristics and its slip rigidity characteristics,
- means for obtaining, for each wheel revolution or at given time intervals, wheel characteristics (41) relating to at least one wheel that comprise the forces applied at the centre of the wheel in the longitudinal X, transverse Y and vertical Z directions and the camber γ and slip δ angles,
- a RAM tyre memory (50) containing a database relating to a plurality of different tyres, with information such as their sizes and the geometrical and mechanical characteristics of each of their tread patterns,
- a first treatment unit (60) designed to treat the said wheel characteristics (41) in relation to the tyre parameters (51) extracted from the said tyre memory (50) that characterise the tyre fitted to the said wheel, and to deduce therefrom, for each wheel revolution or at the said given time intervals, contact characteristics (61) of the said tread patterns that characterise the contact area of the said tyre with the rolling ground surface along the said route, which represent the forces applied on each pattern element in the directions X, Y and Z,
- a second treatment unit (70) designed to predict, from the said contact characteristics (61), instantaneous wear characteristics (71) that represent the wear of each tread pattern at each wheel revolution or at the given time intervals, and to accumulate these instantaneous characteristics over a given period, so as to obtain predicted cumulative wear characteristics (72) for each pattern, and
- a resetting unit (90) designed to integrate, at a given instant, at least one actual cumulative wear characteristic of the tyre on at least one of the tread pattern elements or averaged over an axial section of the tyre, in order to compare at least one of the said predicted cumulative wear characteristics (72) with the corresponding actual wear characteristic (82) and to take account of the result of that comparison with a view to carrying out a new prediction cycle of corrected instantaneous and cumulative wear characteristics, this actual cumulative wear characteristic (82) being able to be obtained from measurement means that may or may not be fitted on the vehicle.

23. Wear prediction system according to Claim 22, such that it also comprises:
- measurement means (30) designed to measure, in real time and for each wheel revolution or at the said given time intervals, the rolling parameters (31) applied at the centre of gravity of the rolling vehicle, including the intensities of the longitudinal γₓ and transverse γ_{y} accelerations or the corresponding longitudinal and transverse forces Fₓ and F_{y}, and
- a third treatment unit (40) designed to treat the said accelerations or forces measured for each wheel revolution or at the said time intervals in relation to the said vehicle parameters (21), to obtain the said wheel characteristics (41) for each wheel revolution or at the said intervals.

24. Wear prediction system according to Claim 23, such that the said rolling parameters also include the speed V of the vehicle, again measured at its centre of gravity, and/or the load carried by the vehicle.

25. Wear prediction system according to Claim 22, such that it comprises means for the direct measurement of the said wheel characteristics by measuring the three components of the resultant of forces exerted by the ground surface over which the vehicle is rolling on the tyre's contact area, and such that the said measurement is determined by treatment of at least two measurements of the circumferential extension or contraction in at least one sidewall of the tyre at two points fixed in space, located at different azimuths along the circumference.

26. Wear prediction system according to any of Claims 22 to 25, such that it also comprises, upstream from the said second treatment unit (70), means for the measurement in real time of static adjustments including the toe-in and camber.

27. Wear prediction system according to any of Claims 22 to 26, such that the said second treatment unit (70) is designed to predict the said instantaneous wear characteristics (71) as a function of parameters relating to the rolling ground surface, such as whether it is dry, wet or damp and/or the temperature of the said surface.

28. Wear prediction system according to Claims any of 22 to 27, such that it also comprises means (80) for measuring the said actual cumulative wear characteristics (82), which are fitted on the vehicle and are designed to inform the vehicle's driver in real time when one or more predetermined wear thresholds have been reached on at least one of the said tread pattern elements.

29. Wear prediction system according to Claim 28 such that the said measurement means (80) are designed to measure the electric capacitance or resistance within the said tread pattern element and to deduce therefrom the height of the tread pattern from a relationship that relates the said capacitance or resistance to the said height.

30. Wear prediction system according to Claim 28, such that, the tread pattern elements of the tyre being interconnected by grooves and the said vehicle comprising a chassis and a suspension system that ensures a flexible connection between the chassis and the wheel, the said measurement means (80) are designed to:
a) measure, at a given instant, a value which represents the distance between, on the one hand, a first point on the said suspension system opposite the tyre and occupying a position or a plurality of positions such that the orthogonal projection of the said first point on the circumferential median plane of the tyre remains an equal distance from that of the axis of the wheel on the said plane, or a second point on the chassis opposite the tyre and, on the other hand, the top surface of at least one of the said tread pattern elements opposite the said first or second point,
b) either, in a first case, measure at the said given instant a reference value that represents a distance measured between the said first or second point and the bottom of one of the said grooves opposite the said first or second point, or, in a second case, subsequently measure another reference value that represents a distance between the said first point and one of the said top surfaces, and
c) compare the value measured in paragraph a) with the reference value measured in paragraph b) in order to deduce, in the said first case a wear datum representing the height of the said tread pattern by differential measurement at the said instant, and in the said second case a wear datum representing the evolution of the wear of the top of the said pattern within a given time interval.

31. Wear prediction system according to Claim 28, such that the said measurement means (80) are designed to allocate, to a discrete impedance variable representing the impedance of a passive tuned circuit contained in at least one of the tread pattern elements, of a discrete wear variable representing the wear of the tread pattern.

32. Wear prediction system according to Claim 28, such that the said measurement means (80) are designed to allocate, to an energy variable representing the energy of an electromagnetic radiation such as the visible light transmitted from the space outside the said tyre to the space inside it through at least one of the said tread pattern elements, of a wear variable representing the wear of the said pattern element(s).

33. Wear prediction system according to Claim 32, such that the said energy variable itself corresponds to the exposure of a means for the transmission of electromagnetic radiations on the top surface of the said pattern element.

34. Wear prediction system according to any of Claims 22 to 27, such that the said measurement means (80) are provided on the vehicle for measuring the average wear of the said tread pattern elements over an axial section of the tyre.

35. Wear prediction system according to Claim 34, such that the said measurement means (80) are designed to:
- estimate the value R_{e, t} of the rolling radius of the tyre at an instant t, and then
- compare this estimated value R_{e,t} with at least one reference value R_{e, t0} for the rolling radius that corresponds to a given degree of wear of the same tyre at a previous time t₀, and calculation of the ratio Rₑ, ₜ/R_{e, t0},
- deduce from this ratio Rₑ, ₜ/Rₑ, t₀ the average wear ratio over an axial section of the tyre, which is equal to the average height hₜ of the tread pattern elements at time t over their average height hₜ₀ at the time t₀, via a wear law specific to the said tyre.

36. Wear prediction system according to Claim 35, such that that the said value R_{e, t} of the tyre's rolling radius at a time t is estimated by :
- first means designed for measuring at a given time t the number of rotations of the wheel on which the tyre is mounted since the said earlier time t₀,
- second means designed for measuring at the time t the distance travelled by the vehicle since the earlier time t₀,
- third means designed for measuring at the said time t corrective parameters related to the vehicle's rolling conditions, in particular including the temperature and internal pressure of the tyre, the load and the drive or braking torque applied to the tyre, and
- an on-board computer designed to provide a theoretical value R_{th, t} of the rolling radius at the time t from the ratio distance travelled / number of wheel rotations at the said time t, to calculate the said estimated value R_{e,t} of the tyre's rolling radius at the said time t from the said theoretical value Rₜₕ, ₜ and from the corrective parameters, to calculate the ratio of this estimated value R_{e, t} to the estimated value R_{e,t0} of the rolling radius at the said time t₀, and to deduce therefrom the said average wear ratio.

37. Wear prediction system according to Claim 36, such that the said first means comprise an "ABS" anti-block braking system associated with an "ESP" electronic programmed stability device.

38. Wear prediction system according to Claims 36 or 37, such that the said second means are designed to measure the said distance travelled directly by means of a reversing-aid radar.

39. Wear prediction system according to Claims 36 or 37, such that the said second means are designed to measure the said distance travelled indirectly via a "GPS" global positioning system.

40. Wear prediction system according to Claims 36 or 37, such that the said second means are designed to measure the said distance travelled from the ratio actual vehicle speed/angular velocity of the wheel.

41. Wear prediction system according to Claim 40, such that the said ratio actual vehicle speed/angular velocity of the wheel is given by the association of an anti-collision radar with an "ABS" anti-block braking system.

## Patentansprüche

1. Verfahren zum Voraussagen des Verschleißes mindestens eines Luftreifens, dessen Reifenlauffläche Profile aufweist, und der ein Land-Kraftfahrzeug ausstattet, das die aufeinander folgenden Schritte aufweist:
(i) Erzielen bei jeder Radumdrehung oder in gegebenen Zeitintervallen von Radmerkmalen (41) in Zusammenhang mit mindestens einem Rad, die die Kräfte umfassen, die an die Mitte dieses Rads in die Längsrichtung, Querrichtung und senkrechte Richtung angelegt werden, sowie den Radsturzwinkel γ und den Reifenlaufwinkel δ,
(ii) eine Verarbeitung der Radmerkmale (41) in Zusammenhang mit Parametern (51), die den Luftreifen, der auf das Rad montiert ist, charakterisieren, zum Erzielen bei jeder Radumdrehung oder in diesen gegebenen Zeitintervallen von Berührungsmerkmalen (61) der Profile, die die Berührungsfläche des Luftreifens mit dem Fahrboden charakterisieren, die für die Kräfte repräsentativ sind, die auf jedes Profil in die Längsrichtung, Querrichtung und senkrechte Richtung angelegt werden, und
(iii)eine Verarbeitung der Berührungsmerkmale (61), um Sofortverschleißmerkmale (71) jedes Profils bei jeder Radumdrehung oder in diesen gegebenen Zeitintervallen vorherzusagen und eine Summierung der Sofortmerkmale über eine gegebene Zeitspanne, um für jedes Profil vorhergesagte Gesamtverschleißmerkmale zu erzielen,
**dadurch gekennzeichnet, dass** es ferner die folgenden aufeinander folgenden Schritte aufweist:
(iv) eine Messung in einem gegebenen Augenblick mindestens eines realen Merkmals der Gesamtabnutzung (82) des Luftreifens auf mindestens einem der Profile oder im Durchschnitt auf einem axialen Schnitt des Luftreifens,
(v) ein Vergleichen mindestens eines der vorhergesagten Gesamtmerkmale (72), die in (iii) erzielt wurden, mit dem in (iv) gemessenen entsprechenden realen Merkmal (82), und
(vi) ein Berücksichtigen des Ergebnisses des in (v) vorgesehenen Vergleichs beim Ausführen eines neuen Voraussagezyklus korrigierter Sofortverschleiß- und Gesamtverschleißmerkmale.

2. Verfahren zum Voraussagen des Verschleißes mindestens eines Luftreifens nach Anspruch 1, das vor dem Schritt (i) Folgendes aufweist:
- eine Messung in Echtzeit und bei jeder Radumdrehung oder in den gegebenen Zeitintervallen von Fahrbeanspruchungen (31), die an den Schwerpunkt des Fahrzeugs beim Fahren auf der Route angelegt werden, und die die Stärken der Längsbeschleunigung γₓ und Querbeschleunigung γ_{y} oder die entsprechende Längskraft und Querkraft F_{X} und F_{Y} umfassen, und dann
- eine Verarbeitung der Beschleunigungen oder Kräfte, die bei jeder Radumdrehung oder in diesen Zeitintervallen in Zusammenhang mit Parametern (21), die das Fahrzeug charakterisieren, gemessen werden, um bei jeder Radumdrehung oder in diesen Zeitintervallen die Merkmale (41) gemäß Schritt (i) zu erzielen.

3. Verfahren zum Voraussagen des Verschleißes mindestens eines Luftreifens nach Anspruch 2, bei dem die Fahrbeanspruchungen auch die Geschwindigkeit V des Fahrzeugs, ebenfalls gemessen im Schwerpunkt, und/oder die von dem Fahrzeug transportierte Last umfassen.

4. Verfahren zum Voraussagen des Verschleißes mindestens eines Luftreifens nach Anspruch 1, bei dem die Radmerkmale direkt in dem Schritt (i) ausgehend von der Messung der drei Komponenten der Resultante von Kräften erzielt werden, die von dem Fahrboden auf die Berührungsfläche des Luftreifens ausgeübt werden, und bei dem die Messungen durch Verarbeiten von mindestens zwei Messungen der Dehnung oder des Schrumpfens des Umfangs in mindestens einer Flanke des Luftreifens an zwei im Raum stationären Punkten, die sich an unterschiedlichen Peilwinkeln entlang des Umfangs befinden, bestimmt werden.

5. Verfahren zum Voraussagen des Verschleißes mindestens eines Luftreifens nach einem der Ansprüche 1 bis 4, bei dem die Messung in Echtzeit statische Einstellungen aufweist, die die Vorspur und die Verkantung vor dem Schritt (iii) umfasst.

6. Verfahren zum Voraussagen des Verschleißes mindestens eines Luftreifens nach einem der Ansprüche 1 bis 5, bei dem die Verarbeitung gemäß Schritt (iii) ferner von Parametern in Zusammenhang mit dem Fahrboden abhängt, wie zum Beispiel seine Trockenheit, Nässe oder Feuchtigkeit und/oder von dem Boden, für die Voraussage der Verschleißsofortmerkmale (71).

7. Verfahren zum Voraussagen des Verschleißes mindestens eines Luftreifens nach einem der Ansprüche 1 bis 6, bei dem die realen Gesamtverschleißmerkmale (82) gemäß Schritt (iv) durch ein Prüfen des Luftreifens beim Stillstand des Fahrzeugs erzielt werden.

8. Verfahren zum Voraussagen des Verschleißes mindestens eines Luftreifens nach einem der Ansprüche 1 bis 6, bei dem die realen Gesamtverschleißmerkmale (82) gemäß Schritt (iv) über Mittel (80) zum kontinuierlichen oder diskontinuierlichen Messen des Verschleißes des Luftreifens erzielt werden, mit welchen das Fahrzeug versehen ist, und die dazu bestimmt sind, den Fahrer des Fahrzeugs in Echtzeit über das Erreichen eines oder mehrerer vorbestimmter Verschleißschwellenwerte auf mindestens einem der Profile zu informieren.

9. Verfahren zum Voraussagen des Verschleißes mindestens eines Luftreifens nach Anspruch 8, bei dem der Schritt (iv) darin besteht, eine Messung der Kapazität oder des elektrischen Widerstands in dem Inneren des Profils durchzuführen und daraus die Höhe dieses Profils durch eine Beziehung abzuleiten, die die Kapazität oder den Widerstand mit dieser Höhe verbindet.

10. Verfahren zum Voraussagen des Verschleißes mindestens eines Luftreifens nach Anspruch 8, bei dem die Profile des Luftreifens untereinander durch Furchen verbunden sind, und bei dem das Fahrzeug ein Fahrgestell oder eine Aufhängungsvorrichtung aufweist, die eine biegsame Verbindung zwischen dem Fahrgestell und dem Rad sicherstellt, bei dem der Schritt (iv) aus Folgendem besteht:
a) in einem gegebenen Augenblick Ausführen einer Messung eines Werts, der für die Entfernung zwischen einerseits einem ersten Punkt, der fest mit der Aufhängungsvorrichtung verbunden ist, die dem Luftreifen gegenüberliegt und eine Position oder mehrere Positionen einnimmt, so dass die orthogonale Projektion des ersten Punkts auf der mittleren Umfangsebene des Luftreifens gleich der Entfernung der Achse des Rads auf der Ebene bleibt, repräsentativ ist, oder einem zweiten Punkt, der fest mit dem Fahrgestell verbunden ist, das dem Luftreifen gegenüberliegt, und, andererseits, dem Scheitel mindestens eines der Profile gegenüber dem ersten oder dem zweiten Punkt,
b) oder, in einem ersten Fall, Ausführen in dem gegebenen Augenblick einer Messung eines Referenzwerts, der für eine Entfernung repräsentativ ist, die zwischen dem ersten oder dem zweiten Punkt und dem Grund einer der Furchen gegenüber dem ersten oder dem zweiten Punkt gemessen wird, oder, in einem zweiten Fall, später Ausführen einer Messung zwischen einem anderen Referenzwert, der für eine Entfernung repräsentativ ist, die zwischen dem ersten Punkt und einem der Scheitel gemessen wird, und
c) Vergleichen des im Absatz a) gemessenen Werts mit dem Referenzwert, der im Absatz b) gemessen wurde, um daraus in dem ersten Fall eine Verschleißinformation abzuleiten, die für die Höhe des Profils repräsentativ ist, durch Differenzmessung in dem Augenblick, und, in dem zweiten Fall, eine Verschleißinformation, die für die Entwicklung des Verschleißes des Scheitels des Profils in einem gegebenen Zeitintervall repräsentativ ist.

11. Verfahren zum Voraussagen des Verschleißes mindestens eines Luftreifens nach Anspruch 8, **dadurch gekennzeichnet, dass** der Schritt (iv) das Zuweisen zu einer diskreten Impedanzvariablen, die für die Impedanz eines passiven Resonanzkreises repräsentativ ist, der in mindestens einem der Profile enthalten ist, einer diskreten Verschleißvariablen, die für den Verschleiß des Profils repräsentativ ist.

12. Verfahren zum Voraussagen des Verschleißes mindestens eines Luftreifens nach Anspruch 8, bei dem der Schritt (iv) die Zuweisung zu einer Energievariablen, die für die Energie einer elektromagnetischen Strahlung, wie zum Beispiel sichtbares Licht, das von dem Außenraum zu dem Innenraum des Luftreifens durch mindestens eines der Profile übertragen wird, repräsentativ ist, einer Verschleißvariablen, die für den Verschleiß des oder der Profile repräsentativ ist.

13. Verfahren zum Voraussagen des Verschleißes mindestens eines Luftreifens nach Anspruch 12, bei dem die Energievariable selbst für die Bündigkeit eines Mittels für das Übertragen elektromagnetischer Strahlungen auf der Oberfläche des Scheitels des Elementes repräsentativ ist.

14. Verfahren zum Voraussagen des Verschleißes mindestens eines Luftreifens nach einem der Ansprüche 1 bis 6, bei dem die realen Gesamtverschleißmerkmale (82) gemäß Schritt (iv) über Mittel (80) erzielt werden, die auf dem Fahrzeug vorgesehen sind, um die mittlere Abnutzung der Profile auf einem axialen Schnitt des Luftreifens zu messen.

15. Verfahren zum Voraussagen des Verschleißes mindestens eines Luftreifens nach Anspruch 14, bei dem der Schritt (iv) nacheinander aus Folgendem besteht:
- Schätzen des Werts R_{e,t} des Rollradius des Luftreifens in einem Augenblick t,
- Vergleichen des geschätzten Werts R_{e,t} mit mindestens einem Referenzwert R_{e,t0} für diesen Rollradius, der einem bestimmten Verschleißgrad des gleichen Luftreifens in einem früheren Augenblick t₀ entspricht, indem das Verhältnis R_{e,t} / R_{e,t0} berechnet wird,
- Ableiten aus diesem Verhältnis R_{e,t} / R_{e,t0} des mittleren Verschleißverhältnisses auf einem axialen Schnitt des Luftreifens, der gleich der mittleren Höhe hₜ der Profile im Augenblick t auf ihrer mittleren Höhe hₜ₀ im Augenblick t₀ ist, über ein für den Luftreifen spezifisches Verschleißgesetz.

16. Verfahren zum Voraussagen des Verschleißes mindestens eines Luftreifens nach Anspruch 15, bei dem der Wert R_{e,t} des Rollradius des Luftreifens in einem Augenblick t geschätzt wird durch:
- Messen in einem gegebenen Augenblick t der Anzahl von Umdrehungen des Rads, auf das der Luftreifen seit dem früheren Augenblick t₀ montiert ist,
- Messen in diesem Augenblick t der Entfernung, die von dem Fahrzeug seit dem früheren Augenblick t₀ zurückgelegt wurde,
- Erzielen eines theoretischen Werts R_{th,t} des Rollradius in diesem Augenblick t durch das Verhältnis der zurückgelegten Entfernung zu der Anzahl Radumdrehungen im Augenblick t,
- Messen in diesem Augenblick t korrigierender Parameter in Zusammenhang mit den Fahrbedingungen des Fahrzeugs, darunter insbesondere die Temperatur und der Innendruck des Luftreifens, die Last und das Antriebsmoment oder Bremsmoment, das auf den Luftreifen angelegt wird, und
- Berechnen des geschätzten Werts R_{e,t} des Rollradius des Luftreifens im Augenblick t ausgehend von den theoretischen Werten R_{th,t} und den korrigierenden Parametern.

17. Verfahren zum Voraussagen des Verschleißes mindestens eines Luftreifens nach einem der Ansprüche 1 bis 16, bei dem der Schritt (vi) ein Initialisieren des oder der vorhergesagten Gesamtmerkmale (72), die in (iii) für den darauf folgenden Voraussagezyklus erzielt wurden, umfasst, aufgrund des Unterschieds, der zwischen dem Wert des oder der vorhergesagten Gesamtmerkmale (72) und dem entsprechenden realen Gesamtverschleißmerkmal (82), das in (iv) gemessen wurde, besteht.

18. Verfahren zum Voraussagen des Verschleißes mindestens eines Luftreifens nach einem der Ansprüche 1 bis 16, bei dem der Schritt (vi) eine adaptive Korrektur der in den Schritten (ii) und (iii) vorgesehenen Verarbeitungen bei dem darauf folgenden Voraussagezyklus aufgrund des Verhältnisses zwischen dem oder jedem vorhergesagten Gesamtmerkmal (72), das in (iii) erzielt wurde, und dem entsprechenden, in (iv) gemessenen realen Gesamtverschleißmerkmal aufweist.

19. Verfahren zum Voraussagen des Verschleißes mindestens eines Luftreifens nach einem der Ansprüche 1 bis 16, bei dem der Schritt (vi) eine Korrektur des oder der vorhergesagten Gesamtmerkmale (72) aufweist, die in (iii) erzielt wurden, aufgrund der Verschleißgeschwindigkeit des Luftreifens auf den letzten zurückgelegten Kilometern.

20. Verfahren zum Voraussagen des Verschleißes mindestens eines Luftreifens nach einem der Ansprüche 1 bis 19, bei dem die vorhergesagten Sofortverschleißmerkmale und/oder die in (iii) erzielten Gesamtverschleißmerkmale für eine oder mehrere bestimmte axiale Umfangszonen der Reifenlauffläche repräsentativ sind.

21. Verfahren zum Voraussagen des Verschleißes mindestens eines Luftreifens nach einem der Ansprüche 1 bis 20, bei dem der Fahrer des Fahrzeugs in Echtzeit über den Verschleiß entweder aller Profile oder der am stärksten abgenutzten Profile informiert wird.

22. System zum Voraussagen des Verschleißes zum Umsetzen des Verfahrens zum Voraussagen nach einem der vorhergehenden Ansprüche, **dadurch gekennzeichnet, dass** das System im Wesentlichen Folgendes aufweist:
- einen Fahrzeugspeicher (20) zum Lesen und Schreiben, der eine Datenbank in Zusammenhang mit mehreren Land-Kraftfahrzeugen aufweist, die jeweils mit Luftreifen versehen sind, die auf Räder montiert sind, wobei diese Datenbank für jedes Fahrzeug seine Masse, seine geometrischen Eigenschaften und seine Schräglaufstarrheitseigenschaften aufweist,
- Mittel, um bei jeder Radumdrehung oder in gegebenen Zeitintervallen Radmerkmale (41) in Zusammenhang mit mindestens einem Rad zu erzielen, die die Kräfte aufweisen, die an die Mitte dieses Rads in die Längsrichtung X, die Querrichtung Y und die senkrechte Richtung Z angelegt werden, sowie den Radsturzwinkel γ und den Reifenlaufwinkel δ,
- einen Luftreifenspeicher (50) zum Lesen und Schreiben, der eine Datenbank in Zusammenhang mit mehreren unterschiedlichen Luftreifen enthält, wie zum Beispiel ihre Maße und die geometrischen und mechanischen Eigenschaften jedes ihrer Profile,
- eine erste Verarbeitungseinheit (60), die dazu vorgesehen ist, die Radmerkmale (41) in Zusammenhang mit Luftreifenparametern (51), die aus dem Luftreifenspeicher (50) extrahiert werden, zu verarbeiten, die den Luftreifen charakterisieren, der auf das Rad montiert ist, und um daraus bei jeder Radumdrehung oder in diesen gegebenen Zeitintervallen Berührungsmerkmale (61) der Profile abzuleiten, die die Berührungsfläche des Luftreifens mit dem Fahrboden der Route charakterisieren, die für die Kräfte repräsentativ sind, die auf jedes Profil in die Richtungen X, Y und Z angelegt werden,
- eine zweite Verarbeitungseinheit (70), die vorgesehen ist, um ausgehend von den Berührungsmerkmalen (61) Verschleißsofortmerkmale (71), die für den Verschleiß jedes Profils bei jeder Reifenumdrehung oder in diesen gegebenen Zeitintervallen repräsentativ sind, vorherzusagen und um über eine gegebene Zeitspanne diese Sofortmerkmale (71) zu summieren, um für jedes Profil vorhergesagte Gesamtverschleißmerkmale (62) zu erzielen, und
- eine Abstimmeinheit (90), die vorgesehen ist, um in einem gegebenen Augenblick mindestens ein reales Gesamtverschleißmerkmal (82) des Luftreifens auf mindestens einem der Profile oder im Durchschnitt auf einem axialen Schnitt des Luftreifens zu integrieren, um mindestens eines der vorhergesagten Gesamtverschleißmerkmale (72) mit dem entsprechenden realen Verschleißmerkmal (82) zu vergleichen und das Ergebnis dieses Vergleichs zu berücksichtigen, um einen neuen Voraussagezyklus mit korrigierten Verschleißsofortmerkmalen durchzuführen, wobei das reale Gesamtverschleißmerkmal (82) von Messmitteln stammen kann, die auf das Fahrzeug montiert sind oder nicht.

23. System zum Voraussagen des Verschleißes nach Anspruch 22, das ferner Folgendes aufweist:
- Messmittel (30), die vorgesehen sind, um in Echtzeit und bei jeder Radumdrehung oder in diesen gegebenen Zeitintervallen Fahrbeanspruchungen (31) zu messen, die auf den Schwerpunkt des Fahrzeugs beim Fahren angelegt werden, und die die Stärken der Längsbeschleunigung γₓ und der Querbeschleunigung γ_{y} oder der entsprechenden Längs- und Querkräfte Fₓ und F_{y} enthalten, und
- eine dritte Verarbeitungseinheit (40), die vorgesehen ist, um die Beschleunigungen oder Kräfte zu verarbeiten, die bei jeder Radumdrehung oder in diesen Zeitintervallen in Zusammenhang mit den Fahrzeugparametern (21) gemessen werden, um bei jeder Radumdrehung oder in diesen Zeitintervallen Radmerkmale (41) zu erzielen.

24. System zum Voraussagen des Verschleißes nach Anspruch 23, bei dem die Fahrbeanspruchungen (31) auch die Geschwindigkeit V des Fahrzeugs umfassen, die ebenfalls im Schwerpunkt gemessen wird, und/oder die von dem Fahrzeug transportierte Last.

25. System zum Voraussagen des Verschleißes nach Anspruch 22, das Mittel aufweist, die vorgesehen sind, um direkt die Radmerkmale ausgehend von der Messung der drei Komponenten der Resultante von Kräften zu messen, die von dem Fahrboden auf die Berührungsfläche des Luftreifens ausgeübt werden, und bei dem die Messung durch Verarbeiten von mindestens zwei Messungen von Dehnung und oder Schrumpfen des Umfangs in mindestens einer Flanke des Luftreifens in zwei stationären Punkten im Raum, die sich in unterschiedlichen Pegelwinkeln entlang des Umfangs befinden, bestimmt wird.

26. System zum Voraussagen des Verschleißes nach einem der Ansprüche 22 bis 25, das ferner stromaufwärts der zweiten Verarbeitungseinheit (70) Mittel zum Messen in Echtzeit für statische Einstellungen, die die Vorspur und die Verkantung enthalten, aufweist.

27. System zum Voraussagen des Verschleißes nach einem der Ansprüche 22 bis 26, bei dem die zweite Verarbeitungseinheit (70) vorgesehen ist, um die Verschleißsofortmerkmale (71) in Abhängigkeit von Parametern in Zusammenhang mit dem Fahrboden vorherzusagen, wie zum Beispiel seine Trockenheit, Nässe oder Feuchtigkeit und/oder die Temperatur des Bodens.

28. System zum Voraussagen des Verschleißes nach einem der Ansprüche 22 bis 27, das ferner Mittel (80) zum Messen der realen Gesamtverschleißmerkmale (82) aufweist, die auf das Fahrzeug montiert und dazu bestimmt sind, den Fahrer des Fahrzeugs in Echtzeit über das Erreichen eines oder mehrerer vorbestimmter Verschleißschwellenwerte auf mindestens einem der Profile zu informieren.

29. System zum Voraussagen des Verschleißes nach Anspruch 28, bei dem die Messmittel (80) vorgesehen sind, um die Kapazität oder den elektrischen Widerstand im Inneren des Profils zu messen und daraus die Höhe des Profils durch eine Beziehung abzuleiten, die die Kapazität oder den Widerstand mit dieser Höhe verbindet.

30. System zum Voraussagen des Verschleißes nach Anspruch 28, bei dem, da die Profile des Luftreifens untereinander durch Furchen verbunden sind und das Fahrzeug ein Fahrgestell und eine Aufhängungsvorrichtung aufweist, die eine biegsame Verbindung zwischen dem Fahrgestell und dem Rad sicherstellt, die Messmittel (80) zu Folgendem vorgesehen sind:
a) in einem gegebenen Augenblick Ausführen einer Messung eines Referenzwerts, der für die Entfernung zwischen einerseits einem ersten Punkt, der fest mit der Aufhängungsvorrichtung verbunden ist, die dem Luftreifen gegenüberliegt und eine Position oder mehrere Positionen einnimmt, so dass die orthogonale Projektion des ersten Punkts auf die mittlere Umfangsebene des Luftreifens gleich der Entfernung dieser der Achse des Rads auf der Ebene bleibt, repräsentativ ist, oder einen zweiten Punkt, der fest mit dem Fahrgestell verbunden ist, das dem Luftreifen gegenüberliegt, und, andererseits, dem Scheitel mindestens eines der Profile gegenüber dem ersten oder dem zweiten Punkt,
b) oder, in einem ersten Fall, Ausführen in dem gegebenen Augenblick einer Messung eines Grenzwerts, der für eine Entfernung zwischen dem ersten oder dem zweiten Punkt und dem Grund einer der Furchen gegenüber dem ersten oder dem zweiten Punkt repräsentativ ist, oder, in einem zweiten Fall, später Ausführen einer Messung eines anderen Referenzwerts, der für eine Entfernung repräsentativ ist, die zwischen dem ersten Punkt und einem der Scheitel gemessen wird, und zum
c) Vergleichen des im Absatz a) gemessenen Referenzwerts mit dem im Absatz b) gemessenen Referenzwert, um daraus in dem ersten Fall eine Verschleißinformation abzuleiten, die für die Höhe des Profils repräsentativ ist, durch Differenzmessung in dem Augenblick, und, in dem zweiten Fall, eine Verschleißinformation, die für die Entwicklung des Verschleißes des Scheitels des Profils in einem gegebenen Zeitintervall repräsentativ ist.

31. System zum Voraussagen des Verschleißes nach Anspruch 28, bei dem die Messmittel (80) vorgesehen sind, um einer diskreten Impedanzvariablen, die für die Impedanz eines passiven Resonanzkreises repräsentativ ist, der in mindestens einem der Profile enthalten ist, eine diskrete Verschleißvariable zuzuweisen, die für den Verschleiß des Profils repräsentativ ist.

32. System zum Voraussagen des Verschleißes nach Anspruch 28, bei dem die Messmittel (80) vorgesehen sind, um einer Energievariablen, die für die Energie einer elektromagnetischen Strahlung repräsentativ ist, wie zum Beispiel das sichtbare Licht, das von dem Außenraum zu dem Innenraum des Luftreifens durch mindestens eines der Profile übertragen wird, eine Verschleißvariable zuzuweisen, die für den Verschleiß des oder der Profile repräsentativ ist.

33. System zum Voraussagen des Verschleißes nach Anspruch 32, bei dem die Energievariable selbst für die Bündigkeit eines Mittels zum Übertragen elektromagnetischer Strahlungen auf der Oberfläche des Scheitels des Elementes repräsentativ ist.

34. System zum Voraussagen des Verschleißes nach einem der Ansprüche 22 bis 27, bei dem die Messmittel (80) auf dem Fahrzeug vorgesehen sind, um die mittlere Abnutzung der Profile auf einem axialen Schnitt des Luftreifens zu messen.

35. System zum Voraussagen des Verschleißes nach Anspruch 34, bei dem die Messmittel (80) für Folgendes vorgesehen sind:
- Schätzen des Werts R_{e,t} des Rollradius des Luftreifens in einem Augenblick t, dann
- Vergleichen dieses geschätzten Werts R_{e,t} mit mindestens einem Referenzwert R_{e,t0} für diesen Rollradius, der einem bestimmten Verschleißgrad des gleichen Luftreifens in einem früheren Augenblick t₀ entspricht, indem das Verhältnis R_{e,t} / R_{e,t0} berechnet wird, dann
- Ableiten aus diesem Verhältnis R_{e,t} / R_{e,t0} des mittleren Verschleißverhältnisses auf einem axialen Schnitt des Luftreifens, der gleich der mittleren Höhe hₜ der Profile im Augenblick t auf ihrer mittleren Höhe hₜ₀ im Augenblick t₀ ist, über ein für den Luftreifen spezifisches Verschleißgesetz.

36. System zum Voraussagen des Verschleißes nach Anspruch 35, bei dem der Wert R_{e,t} des Rollradius des Luftreifens in einem Augenblick t geschätzt wird durch:
- erste Mittel, die vorgesehen sind, um in einem gegebenen Augenblick t die Anzahl von Umdrehungen des Rads zu messen, auf das der Luftreifen seit dem früheren Augenblick t₀ montiert ist,
- zweite Mittel, die vorgesehen sind, um in diesem Augenblick t die von dem Fahrzeug seit dem früheren Augenblick t₀ zurückgelegte Entfernung zu messen,
- dritte Mittel, die vorgesehen sind, um in diesem Augenblick t korrigierende Parameter in Zusammenhang mit den Fahrbedingungen des Fahrzeugs zu messen, die insbesondere die Temperatur und den Innendruck des Luftreifens, die Last und das Antriebsmoment oder Bremsmoment an dem Luftreifen umfassen, und
- einen Bordcomputer, der vorgesehen ist, um einen theoretischen Wert R_{th,t} des Rollradius in diesem Augenblick t durch das Verhältnis zurückgelegte Entfernung / Anzahl Radumdrehungen in diesem Augenblick t zu liefern, um den Schätzwert R_{e,t} des Rollradius in diesem Augenblick t ausgehend von den theoretischen Wert R_{th,t} zu berechnen und korrigierende Parameter, um das Verhältnis dieses Schätzwerts R_{e,t} zu dem Schätzwert R_{e,t0} des Rollradius in dem Augenblick t₀ zu berechnen und daraus das mittlere Verschleißverhältnis abzuleiten.

37. System zum Voraussagen des Verschleißes nach Anspruch 36, bei dem die ersten Mittel ein "ABS"-System verbunden mit einer Vorrichtung für elektronisches Stabilitätsprogramm "ESP" aufweisen.

38. System zum Voraussagen des Verschleißes nach dem Anspruch 36 oder 37, bei dem die zweiten Mittel vorgesehen sind, um die zurückgelegte Entfernung direkt über einen Rückfahrradar zu messen.

39. System zum Voraussagen des Verschleißes nach Anspruch 36 oder 37, bei dem die zweiten Mittel vorgesehen sind, um die zurückgelegte Entfernung indirekt über ein weltweites Positionierungssystem "GPS" zu messen.

40. System zum Voraussagen des Verschleißes nach Anspruch 36 oder 37, bei dem die zweiten Mittel vorgesehen sind, um die zurückgelegte Entfernung ausgehend von dem Verhältnis zwischen der realen Geschwindigkeit des Fahrzeugs und der Winkelgeschwindigkeit des Rads zu messen.

41. System zum Voraussagen des Verschleißes nach Anspruch 40, bei dem das Verhältnis zwischen realer Geschwindigkeit des Fahrzeugs und der Winkelgeschwindigkeit des Rads von der Verbindung eines Antikollisionsradars und einem "ABS"-System gegeben wird.
